# EUROPEAN PATENT SPECIFICATION

(11) **EP 2 816 718 B1**
(45) Date of publication and mention of the grant of the patent: **15.05.2019**
(21) Application number: 13275143.9
(22) Date of filing: 18.06.2013
(51) Int. Cl.: H02M 7/483, H02M 5/458, H02M 7/487, H02M 3/335

(54) **Multilevel power converter**
Mehrstufen-Stromrichter
Convertisseur de puissance à plusieurs niveaux

(43) Date of publication of application: 24.12.2014
(73) Proprietor: General Electric Technology GmbH, 5400 Baden (CH)
(72) Inventor: Outram, John Lewis, Stone, Stattfordshire ST15 8YD (GB); Trainer, David Reginald, Derby DE24 0AQ (GB)
(74) Representative: Fischer, Michael Maria

(56) References cited:
- WO-A1-2013/071975
- DAVIDSON C C ET AL: "Innovative concepts for hybrid Multi-Level converters for HVDC power transmission", INTERNATIONAL CONFERENCE ON AC AND DC POWER TRANSMISSION.(ACDC 2010), XX, XX, 19 October 2010 (2010-10-19), pages 1-5, XP002675729, DOI: 10.1049/CP.2010.0982 ISBN: 978-1-84919-308-5

## Description

This invention relates to a voltage source converter, a static synchronous compensator, an AC to AC converter assembly and a DC to DC converter assembly.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC power to DC power is also utilized in power transmission networks where it is necessary to interconnect the AC networks operating at different frequencies.

In any such power transmission network, converters are required at each interface between AC and DC power to effect the required conversion, and one such form of converter is a voltage source converter (VSC).

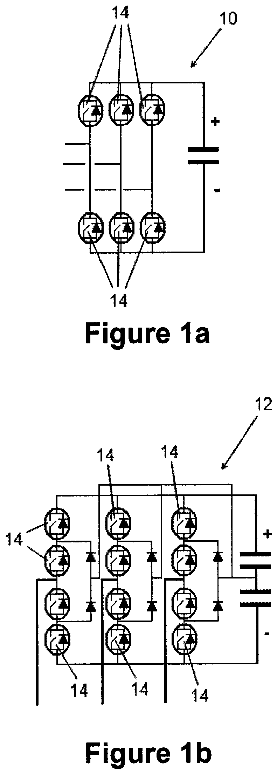

It is known in voltage source converters to use six-switch (two-level) and three-level converter topologies 10,12 with insulated gate bipolar transistors (IGBT) 14, as shown in Figures 1a and 1b. The IGBT devices 14 are connected and switched together in series to enable high power ratings of 10's to 100's of MW to be realized. In addition, the IGBT devices 14 switch on and off several times at high voltage over each cycle of the AC supply frequency to control the harmonic currents being fed to the AC network. This leads to high losses, high levels of electromagnetic interference and a complex design.

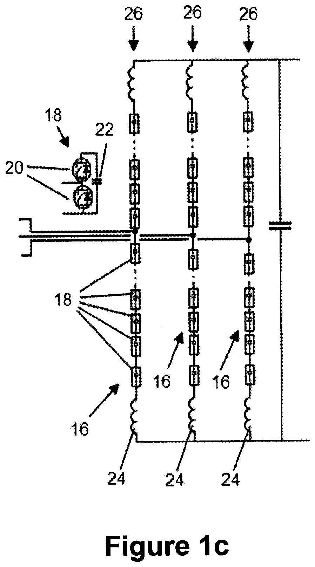

It is also known in voltage source converters to use a multilevel converter arrangement such as that shown in Figure 1c. The multilevel converter arrangement includes respective converter arms 16 of cells 18 connected in series. Each converter cell 18 includes a pair of series-connected insulated gate bipolar transistors (IGBTs) 20 connected in parallel with a capacitor 22. The individual converter cells 18 are not switched simultaneously and the converter voltage steps are comparatively small. The capacitor 22 of each converter cell 18 is configured to have a sufficiently high capacitive value in order to constrain the voltage variation at the capacitor terminals in such a multilevel converter arrangement, and a high number of converter cells 18 are required due to the limited voltage ratings of the IGBTs 20. An arm reactor 24 is also required in each converter bridge 16 to limit transient current flow between converter limbs 26, and thereby enable the parallel connection and operation of the converter limbs 26. These factors lead to expensive, large and heavy equipment that has significant amounts of stored energy.

WO 2013/071975 A1 discloses a power electronic converter for connecting AC and DC networks and transferring power therebetween. The power electronic converter includes first and second DC terminals for connection in use to a DC network and at least one primary converter limb extending between the first and second DC terminals, the primary converter limb having first and second primary limb portions separated by a primary AC terminal for connection in use to a respective phase of a multi-phase AC network. At least one of the first and second primary limb portions includes at least one primary active switching module to selectively allow current to flow through the corresponding primary converter limb in a first direction from the corresponding primary AC terminal to the DC terminals and in a second direction from the DC terminals to the corresponding primary AC terminal. At least one secondary converter limb extends between the first and second DC terminals and has first and second secondary limb portions separated by a secondary AC terminal for connection in use to a further respective phase of the said multi-phase AC network. Each of the first and second secondary limb portions includes at least one passive current check element to limit current flow through the corresponding secondary converter limb to a single direction from the corresponding secondary AC terminal to the DC terminals.

"Innovative concepts for hybrid multi-level converters for HVDC power transmission", Davidson C C et al, International Conference on AC and DC Power Transmission (ACDC 2010), XX, XX, 19 October 2010 (2010-10-19), pages 1-5, XP002675729, DOI: 10.1049/CP.2010.0982, ISSN: 978-1-84919-308-5 discloses converters for use in VSC-HVDC schemes combining the advantages of low-pulse-number converters employing large numbers of IGBTs in series in each valve with Pulse Width Modulation (PWM) and converters using the M²C topology using a "multi-level" approach to achieve very high pulse numbers.

Such converters rely on using a combination of IGBT valves using series-connected IGBTs and multilevel converters based on individual and isolated half-bridge and full-bridge submodules which provide a "wave-shaping" function. Several options are possible, where the multilevel cells are connected in series or parallel with series IGBT "Director" valves and with the multilevel cells on either the AC or DC side of the converter.

According to a first aspect of the invention, there is provided a voltage source converter comprising:
first and second DC terminals for connection to a DC electrical network; and
a converter limb directly connected between the first and second DC terminals, the converter limb including:
   an AC terminal for connection to an AC electrical network;
   a first limb portion directly connected between the first DC terminal and the AC terminal; and
   a second limb portion directly connected between the second DC terminal and the AC terminal,
wherein only one of the first and second limb portions includes a multilevel converter block, the other of the first and second limb portions includes a switching block, the switching block is switchable to selectively permit current flow in at least one direction in the corresponding limb portion and inhibit current flow in at least one direction in the corresponding limb portion, and at least one of the first and second limb portions is controllable to control the configuration of an AC voltage waveform at the AC terminal.

The configuration of the voltage source converter according to the invention means that only one of the first and second limb portions of the converter limb includes a multilevel converter block, and the other of the first and second limb portions of the converter limb does not include a multilevel converter block. It follows that the switching block of the other of the first and second limb portions of the converter limb is not a multilevel converter block.

The multilevel converter block may be any device that is capable of switching the voltage or current at its input and/or output terminals between multiple (two, three or more) levels. The switching block may be any switching apparatus that is capable of being switchable to selectively permit and inhibit current flow in at least one direction in the corresponding limb portion.

During the operation of the voltage source converter to transfer power between the AC and DC electrical networks, the switching block is switched into and out of circuit between the AC terminal and the corresponding DC terminal over a cycle of the AC electrical network. This means that the distribution of current flow in the voltage source converter between the limb portions varies over the cycle. As such, when the switching block is switched out of circuit between the AC terminal and the corresponding DC terminal and thereby is not conducting a limb portion current between the AC terminal and corresponding DC terminal, the multilevel converter block is conducting the entire current flow in the voltage source converter between the AC terminal and corresponding DC terminal and can be operated to control the configuration of the AC voltage waveform at the AC terminal such that the AC voltage waveform is constructed from multiple voltage levels. In this manner the voltage source converter is capable of generating a high quality AC voltage waveform at the AC terminal and thereby enables the transfer of high quality power between the AC and DC electrical networks. The quality of the AC voltage waveform at the AC terminal may vary depending on the number of levels in the multilevel converter block and associated filter components.

When the switching block is switched into circuit between the AC terminal and the corresponding DC terminal and thereby is connecting the AC terminal and corresponding DC terminal, the multilevel converter block is conducting a converter limb current between the DC terminals and can be operated to control the configuration of the DC current waveform at the DC terminals. In this manner the voltage source converter is capable of generating a high quality DC current waveform and thereby enables the transfer of high quality power between the AC and DC electrical networks. The quality of the DC current waveform may vary depending on the number of levels in the multilevel converter block and associated filter components.

The inclusion of the multilevel converter block in the converter limb obviates the need to switch the switching block at a high frequency to generate a high quality AC voltage waveform at the AC terminal. This not only permits a reduction in switching frequency of the switching block to reduce switching losses and electromagnetic interference, but also minimises or eliminates the need for harmonic filtering hardware, thus improving the reliability and efficiency of the voltage source converter. In contrast, replacing the multilevel converter block with another switching block would result in the problems described earlier with reference to the conventional voltage source converters of Figures 1a and 1b.

In addition a multilevel converter block typically switches faster than the AC frequency of the AC electrical network. In contrast a switching block is only required to switch a limited number of times per cycle. Therefore, the configuration of the voltage source converter according to the invention reduces the number of components and switching events in the converter limb in comparison to a converter limb of a conventional voltage source converter, an example of which is shown in Figure 1c. As such the reduction in the number of components and switching events in the converter limb provides further reductions in terms of converter losses, size, weight and costs.

Furthermore the multilevel converter block may be operated to control the flow of current into and out of the switching block. Such operation of the multilevel converter block, together with the use of a reduced switching frequency for the switching block, allows the use of uncontrolled or semi-controlled switching devices (such as diodes and thyristors) in the switching block. This thereby results in reductions in converter losses, size, weight and costs whilst improving the reliability and fault blocking capability of the voltage source converter.

A reduction in converter losses resulting from the configuration of the voltage source converter according to the invention reduces the cooling requirements of the voltage source converter, thus reducing the size, weight and cost of the associated cooling equipment.

The configuration of the voltage source converter according to the invention therefore results in an economical, space-saving voltage source converter with high voltage capabilities.

The arrangement of the multilevel converter block may vary depending on the requirements of the associated power application.

In embodiments of the invention, the multilevel converter block may include a neutral point clamped converter or a flying capacitor converter. In further embodiments of the invention, the multilevel converter block may include at least one module, the or each module including at least one switching element and at least one energy storage device, the or each switching element and the or each energy storage device in the or each module selectively combining to provide a voltage source.

Such arrangements of the multilevel converter block provide reliable means of generating a high quality AC voltage waveform at the AC terminal and a high quality DC current waveform at the DC terminals.

The arrangement of the or each module in the multilevel converter block may vary depending on the requirements of the associated power application.

The or each switching element and the or each energy storage device in the or each module may combine to selectively provide a unidirectional or bidirectional voltage source, and/or the or each switching element and the or each energy storage device in the or each module may combine to selectively provide a unipolar or bipolar voltage source.

In a first exemplary arrangement of the or each module in the multilevel converter block, the or each module may include a pair of switching elements connected in parallel with an energy storage device in a half-bridge arrangement to define a 2-quadrant unipolar module that can provide near-zero or positive voltage and can conduct current in two directions.

In a second exemplary arrangement of the or each module in the multilevel converter block the or each module may include two pairs of switching elements connected in parallel with an energy storage device in a full-bridge arrangement to define a 4-quadrant bipolar module that can provide negative, near-zero or positive voltage and can conduct current in two directions.

In embodiments of the invention employing the use of one or more modules in the multilevel converter block, the multilevel converter block may include a plurality of series-connected modules. The plurality of series-connected modules defines a chain-link converter.

It is possible to build up a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation, thus enabling the generation of a high quality AC voltage waveform at the AC terminal.

In addition the modular arrangement of the chain-link converter means that it is straightforward to increase or decrease the number of modules in the chain-link converter to achieve a desired voltage rating of the voltage source converter.

Each energy storage device may be any device that is capable of storing and releasing energy, e.g. a capacitor, fuel cell or battery.

The arrangement of the switching block may vary depending on the requirements of the associated power application.

In embodiments of the invention, the switching block may include a passive current check element and/or an active switching element.

The or each passive current check element may include a single passive current check device or a plurality of series-connected passive current check devices. The or each passive current check device may be any device that is capable of limiting current flow in only one direction, e.g. a diode.

The number of passive current check devices in each passive current check element may vary depending on the required voltage rating of that passive current check element.

At least one switching element may include a naturally-commutated active switching device (e.g. a thyristor).

The use of at least one naturally-commutated active switching device or passive current check device in a limb portion not only improves the robustness of that limb portion, but also makes that limb portion capable of withstanding surge currents that might occur as a result of faults in the DC electrical network due to their construction. This provides the voltage source converter with a simple and reliable means of blocking a fault current flowing through the voltage source converter, thus obviating the need to operate the multilevel converter block to block the fault current.

At least one switching element may include a self-commutated active switching device. The self-commutated active switching device may be an insulated gate bipolar transistor, a gate turn-off thyristor, a field effect transistor, an injection-enhanced gate transistor, an integrated gate commutated thyristor or any other self-commutated active switching device.

Each switching element may include a switching sub-element or a plurality of series-connected switching sub-elements. The or each switching sub-element may include a single active switching device or a plurality of series-connected active switching devices.

When each switching element includes a switching sub-element, each switching element may further include a passive current check element, the passive current check element being connected in anti-parallel with the single active switching device or the plurality of series-connected active switching devices.

Each switching element may include a first unidirectional switching sub-element. Each switching element may further include a second unidirectional switching sub-element, the second unidirectional switching sub-element being connected in anti-parallel with the first unidirectional switching sub-element.

When each switching element includes a switching sub-element connected in anti-parallel with a passive current check element, such switching elements can be paired in anti-series to create a macro switch capable of actively switching current in both directions. Each switching element may include a single macro switch or a plurality of series-connected macro switches.

When each switching element includes a plurality of series-connected switching sub-elements, each switching element may include a plurality of passive current check elements, each of the plurality of passive current check elements being connected in anti-parallel with the single active switching device or the plurality of series-connected active switching devices of a respective one of the series-connected switching sub-elements.

The number of active switching devices in each switching element may vary depending on the required voltage and current ratings of that switching element.

In further embodiments of the invention, the switching block may be configured either as a unidirectional switching block to limit current flow through the corresponding limb portion to a single direction or a bidirectional switching block to permit current flow through the corresponding limb portion in two directions, and/or the multilevel converter block may be configured as a bidirectional multilevel converter block to permit current flow through the corresponding limb portion in two directions.

Configuring the switching block and multilevel converter block as bidirectional blocks enables the voltage source converter to be controlled to create a symmetrical transfer of power between the AC and DC electrical networks, in which the voltage source converter provides full power transfer functionality in both directions. Such a voltage source converter may be operated in both AC to DC and DC to AC power transfer modes without having to modify the structure of the converter limb to permit current flow in both directions in each limb portion 38,40.

Configuring the switching block as a unidirectional switching block enables the voltage source converter to be controlled to create an asymmetrical transfer of power between the AC and DC networks, in which the voltage source converter provides full power transfer functionality in one direction and provides no power transfer in the other direction.

A voltage source converter with an asymmetrical power transfer functionality is perfectly acceptable in certain power transfer applications with asymmetrical power transfer requirements. For example, the voltage source converter with an asymmetrical power transfer functionality may be used in power transfer applications where there is a heavy bias towards the export of power and a minimal need to import power, such as arises in renewable wind and tidal power generation where the required power transfer is predominantly from the source to a distribution grid. The configuration of the switching block and multilevel converter block to create a voltage source converter with an asymmetrical power transfer functionality results in a more optimal voltage source converter for power transfer applications with asymmetrical power transfer requirements, in terms of losses, efficiency, size, weight and cost.

In embodiments of the invention, either or each of the first and second limb portions of the converter limb may further include an inductor connected in series between the AC terminal and the corresponding DC terminal.

The voltage source converter may be a multi-phase voltage source converter. More particularly, the voltage source converter may include a plurality of converter limbs, the AC terminal of each converter limb being connectable to a respective phase of a multi-phase AC electrical network.

In embodiments of the invention, the voltage source converter may include a plurality of converter limbs, the AC terminal of each converter limb being connectable to a respective phase of a multi-phase AC electrical network, wherein only one of the first and second limb portions of each converter limb includes a multilevel converter block, and the other of the first and second limb portions of each converter limb includes a switching block. It will be appreciated that, in such embodiments, the first DC terminal may be connected to one of first and second terminals of the DC electrical network while the second DC terminal is connected to the other of the first and second terminals of the DC electrical network.

The voltage source converter may include a controller to selectively control at least one of the first and second limb portions.

In embodiments of the invention, the controller may be configured to selectively control at least one of the first and second limb portions to control the configuration of the AC voltage waveform at the corresponding AC terminal so as to transfer power from the AC electrical network to the DC electrical network in an AC to DC power transfer mode and to transfer power from the DC electrical network to the AC electrical network in a DC to AC power transfer mode, wherein the multilevel converter block is configured to set the power transferable in one of the AC to DC and DC to AC power transfer modes to be equal to or different than the power transferable in the other of the AC to DC and DC to AC power transfer modes. The configuration of the multilevel converter block in this manner optimises the power transfer capabilities of the voltage source converter to match the symmetrical or asymmetrical power transfer requirements of the associated power application.

In further embodiments of the invention, the controller may be configured to selectively switch the switching block into and out of circuit between the AC terminal and the corresponding DC terminal once over a cycle of the AC electrical network. As mentioned earlier, the inclusion of the multilevel converter block in the converter limb obviates the need to switch the switching block at a high frequency to generate a high quality AC voltage waveform at the AC terminal.

In embodiments of the invention employing the use of a plurality of converter limbs, the controller may be configured to selectively control at least one of the first and second limb portions to control the configuration of the AC voltage waveform at the corresponding AC terminal so as to generate a plurality of sinusoidal phase-to-phase AC voltage waveforms. The control of at least one of the first and second limb portions in this manner enables the voltage source converter to draw a plurality of sinusoidal AC phase currents from the AC electrical network. In such embodiments, the controller may be configured to selectively control at least one of the first and second limb portions to control the configuration of the AC voltage waveform at the corresponding AC terminal to generate a plurality of sinusoidal phase-to-neutral AC voltage waveforms and a neutral-to-earth voltage waveform, the neutral-to-earth voltage waveform being shaped to enable each AC terminal to be at substantially the same potential as the first or second DC terminal for a predefined period. The construction of such phase-to-neutral and neutral-to-earth AC voltage waveforms is facilitated by the provision of the multilevel converter block which, as described earlier, can be operated to control the configuration of the AC voltage waveform at the AC terminal such that the AC voltage waveform is constructed from multiple voltage levels.

In still further embodiments of the invention, the controller may be configured to selectively switch the switching block in a pulse-width modulated manner to control the configuration of the AC voltage waveform at the AC terminal.

In embodiments of the invention, the controller may be configured to selectively control the multilevel converter block to minimise the voltage across the switching block prior to the switching of the switching block into or out of circuit between the AC terminal and the corresponding DC terminal.

In this manner the switching block may be switched at near-zero voltage. Such switching, which is known as soft-switching, reduces the rates of change of voltage and/or current for the switching block, thus reducing switching losses and electromagnetic interference for the switching block. Moreover, when the switching block includes a plurality of series-connected switching elements, soft-switching simplifies voltage sharing among the plurality of series-connected switching elements. This advantageously reduces or eliminates the need for large voltage grading snubber circuitry which would otherwise add size, weight and cost to the voltage source converter.

In further embodiments of the invention, the controller may be configured to simultaneously switch both limb portions into circuit to form a current circulation path including the converter limb and the DC electrical network.

The current circulation path may be intermittently formed during the operation of the voltage source converter to transfer power between the AC and DC electrical networks, without significantly affecting the overall power transfer between the AC and DC electrical networks.

The formation of the current circulation path permits flow of a circulation current between the converter limb and the DC electrical network. In use, the circulation current may be employed to modify the power characteristics of the voltage source converter and/or the DC electrical network. This advantageously obviates the need for separate hardware to modify the power characteristics of the voltage source converter and/or the DC electrical network, thus providing savings in terms of size, weight and cost of the voltage source converter.

A circulation current flowing in the current circulation path may include a DC current component to exchange energy between the multilevel converter block and the DC electrical network. This provides a reliable means of improving the control of the multilevel converter block through regulation of the voltage level or range of one or more components of the multilevel converter block. For example, when the multilevel converter block includes a plurality of series-connected modules, the use of the circulation current to exchange energy between the multilevel converter block and the DC electrical network permits balancing of the individual voltage levels of the energy storage devices of the chain-link converter, thus simplifying the control of the multilevel converter block by allowing the use of average voltage value as feedback to control the operation of the multilevel converter block.

A circulation current flowing in the current circulation path includes an AC current component. The AC current component may, for example, be shaped to minimise or cancel a ripple current in the DC electrical network. This allows the voltage source converter to act as an active DC filter.

In embodiments of the invention, the controller may be configured to selectively control the multilevel converter block to construct, at the AC terminal, an AC voltage with a peak value which is higher than a DC voltage at the corresponding DC terminal. Construction of such an AC voltage at the AC terminal may be enabled, for example, through appropriate selection of an AC voltage of the AC electrical network, a winding ratio of an associated interfacing transformer, a DC voltage of the DC electrical network and a neutral-to-earth voltage waveform.

The AC voltage may be constructed to have a peak value which is higher than a DC voltage at the corresponding DC terminal such that that the product of the voltage provided by the multilevel converter block and the current flowing through the multilevel converter block gives a net zero energy exchange in the multilevel converter block over a cycle of the AC electrical network.

In embodiments of the invention employing the use of at least one module, the controller may be configured to selectively control at least one of the first and second limb portions to modify the ratio of the magnitude of an AC current at the AC terminal to the magnitude of a DC current at the first and second DC terminals to minimise a net change in energy level of the multilevel converter block over a cycle of the AC electrical network.

In embodiments of the invention employing the use of at least one module, the controller may be configured to selectively control the multilevel converter block to discretely discharge and charge the or each energy storage device to minimise a net change in energy level of the or each energy storage device over a cycle or a plurality of cycles of the AC electrical network whilst at least one of the first and second limb portions is controlled to control the configuration of the AC voltage waveform at the AC terminal. This may be carried out by inserting the or each energy storage device into the corresponding limb portion so that the limb portion current flows in either forward or reverse directions through the or each energy storage device.

In embodiments of the invention, the controller may be configured to selectively control the multilevel converter block to control a reverse recovery current of the switching block. For example, the controller may be configured to selectively control the multilevel converter block to control the rate of decay of on-state current and rate of application of blocking voltage of the switching block.

In further embodiments of the invention, the controller may be configured to selectively control the multilevel converter block to provide a voltage which opposes a flow of current created by a fault occurring, in use, in the DC electrical network.

The ability to operate the multilevel converter block in this manner results in a voltage source converter with in-built current limiting capability and thereby obviates the need for separate current limiting hardware to limit a flow of current created by a fault occurring in the DC electrical network, thus providing savings in terms of size, weight and cost of the voltage source converter.

In still further embodiments of the invention, the voltage source converter may further include at least one reactive element, and the controller may be configured to selectively control at least one of the first and second limb portions to vary a phase and/or magnitude of a voltage across the or each reactive element so as to generate a leading or lagging AC current at the AC terminal. This in turn enables the voltage source converter to exchange reactive power with the AC electrical network, thus resulting in a voltage source converter with increased power transfer functionality. The or each reactive element may be, but is not limited to, a transformer winding, a line reactor, a filter inductor, or an inductor forming part of each limb portion.

In embodiments of the invention employing the use of a plurality of converter limbs, the controller may be configured to selectively control at least one of the first and second limb portions to define a multi-phase static synchronous compensator in which the first or second DC terminal defines the neutral point of a star configuration and the corresponding limb portions define the branches of the star configuration. The configuration of the limb portions in this manner enables the voltage source converter to exchange reactive power with the AC electrical network in the event that the DC electrical network is offline due to an occurrence of a fault.

According to a second aspect of the invention, there is provided a static synchronous compensator comprising a voltage source converter according to any embodiment of the first aspect of the invention.

The configuration of the static synchronous compensator according to the invention therefore results in an economical, space-saving static synchronous compensator with high voltage capabilities.

According to a third aspect of the invention, there is provided an AC to AC converter assembly for interconnecting AC electrical networks, the AC to AC converter assembly comprising a rectifier and an inverter, each of the rectifier and inverter including first and second DC terminals and at least one AC terminal, the or each AC terminal of the rectifier being connectable to a first AC electrical network, the or each AC terminal of the inverter being connectable to a second AC electrical network, either or each of the rectifier and inverter being a voltage source converter according to any embodiment of the first aspect of the invention, wherein the first DC terminals of the rectifier and inverter are interconnected via a first transmission link, and the second DC terminals of the rectifier and inverter are interconnected via a second transmission link.

The arrangement of the AC to AC converter assembly in this manner results in a small, lightweight, inexpensive, efficient and reliable means of connecting AC electrical networks and transferring high quality power therebetween.

According to a fourth aspect of the invention, there is provided a DC to DC converter assembly for interconnecting DC electrical networks, the DC to DC converter assembly comprising an inverter and a rectifier, each of the inverter and rectifier including first and second DC terminals and at least one AC terminal, the DC terminals of the inverter being connectable to a first DC electrical network, the DC terminals of the rectifier being connectable to a second DC electrical network, either or each of the inverter and rectifier being a voltage source converter according to any embodiment of the first aspect of the invention, wherein the AC terminals of the inverter and rectifier are interconnected via a transmission link or a plurality of transmission links.

The arrangement of the DC to DC converter assembly in this manner results in a small, lightweight, inexpensive, efficient and reliable means of connecting DC electrical networks and transferring high quality power therebetween.

Preferred embodiments of the invention will now be described, by way of non-limiting examples only, with reference to the accompanying drawings in which:
Figures 1a, 1b and 1c show, in schematic form, prior art voltage source converters;
Figure 2 shows, in schematic form, a voltage source converter according to a first embodiment of the invention;
Figures 3a to 3c respectively show, in schematic form, the structure of a 2-quadrant unipolar module, an active switching device and a 4-quadrant bipolar module;
Figures 4a to 4e illustrate, in graph form, the operation of the voltage source converter of Figure 2;
Figure 5 shows, in schematic form, a voltage source converter according to a second embodiment of the invention;
Figure 6 shows, in schematic form, a voltage source converter according to a third embodiment of the invention;
Figure 7 shows, in schematic form, a voltage source converter according to a fourth embodiment of the invention;
Figure 8 shows, in schematic form, a static synchronous compensator according to a fifth embodiment of the invention;
Figure 9 shows, in schematic form, an AC to AC converter assembly according to a sixth embodiment of the invention; and
Figure 10 shows, in schematic form, a DC to DC converter assembly according to a seventh embodiment of the invention.

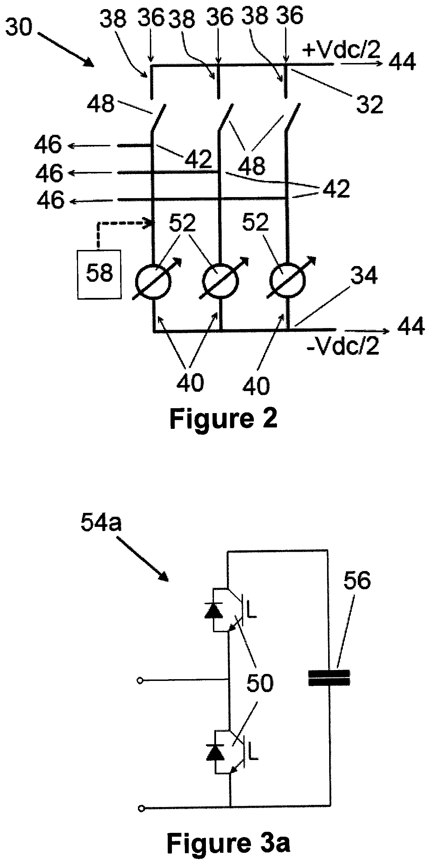

A first voltage source converter 30 according to a first embodiment of the invention is shown in Figure 2.

The first voltage source converter 30 comprises first and second DC terminals 32,34 and three converter limbs 36.

The first voltage source converter 30 includes first and second DC terminals 32,34 and three converter limbs 36. Each converter limb 36 is directly connected between the first and second DC terminals 32,34.

Each converter limb 36 includes first and second limb portions 38,40 and an AC terminal 42. The first limb portion 38 is directly connected between the first DC terminal 32 and the AC terminal 42. The second limb portion is directly connected between the second DC terminal 40 and the AC terminal 42.

In use, the first and second DC terminals 32,34 of each converter limb 36 are respectively connected to first and second terminals of a DC electrical network 44, the first terminal carrying a positive DC voltage of +Vdc/2 and the second terminal carrying a negative DC voltage of -Vdc/2, and the AC terminal 42 of each converter limb 36 is connected to a respective phase of a three-phase AC electrical network 46.

The first limb portion 38 of each converter limb 36 includes a switching block 48. The switching block 48 includes a switching element 50 that includes a plurality of series-connected active switching devices. The switching element 50 of the switching block 48 further includes a plurality of passive current check elements, each of the plurality of passive current check elements being connected in anti-parallel with a respective one of the plurality of series-connected active switching devices.

The configuration of the switching block 48 in this manner results in a bidirectional switching block 48 that permits current flow through the first limb portion 38 in two directions.

In use, in each converter limb 36, the switching block 48 is switchable to selectively permit current flow in either direction in the first limb portion 38 and inhibit current flow in one direction in the first limb portion 38.

The second limb portion 40 of each converter limb 36 includes a multilevel converter block 52. The multilevel converter block 52 includes a plurality of series-connected modules 54a.

The configuration of the first voltage source converter 30 in this manner means that only the second limb portion 40 of each converter limb 36 includes a multilevel converter block 52, and the first limb portion 38 of each converter limb 36 does not include a multilevel converter block 52. In the embodiment shown, the switching block 48 of the first limb portion 38 of each converter limb 36 is not a multilevel converter block 52.

Figure 3a shows, in schematic form, the structure of each module 54a in the multilevel converter block 52.

Each module 54a includes one pair of switching elements 50 and an energy storage device in the form of a capacitor 56. The pair of switching elements 50 is connected in parallel with the capacitor 56 in a half-bridge arrangement between a pair of module terminals.

Each switching element 50 of each module 54a in the multilevel converter block 52 includes a single active switching device and a passive current check element that is connected in anti-parallel with the active switching device.

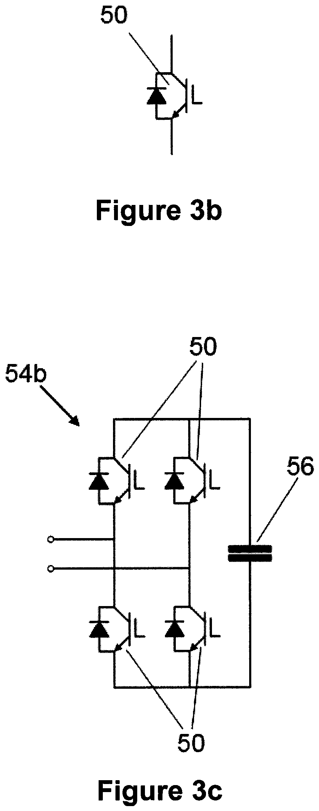

Each active switching device is in the form of an insulated gate bipolar transistor (IGBT), as shown in Figure 3b. It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of active switching devices in each switching element 50 may vary depending on the required voltage and current ratings of that switching element 50.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element. It is also envisaged that, in other embodiments of the invention, each diode may be replaced by an active switching device, or may be omitted from each converter limb 36.

It is further envisaged that, in other embodiments of the invention, each capacitor 56 may be replaced by another type of energy storage device that is capable of storing and releasing energy, e.g. a fuel cell or battery.

The plurality of series-connected modules 54a in the multilevel converter block 52 defines a chain-link converter.

The capacitor 56 of each module 54a is selectively bypassed or inserted into the chain-link converter by changing the states of the switching elements 50. This selectively directs current through the capacitor 56 or causes current to bypass the capacitor 56, so that the module 54a provides a near-zero or positive voltage.

The capacitor 56 of the module 54a is bypassed when the switching elements 50 in the module 54a are configured to directly connect the module terminals together. This causes current in the chain-link converter to pass from one module terminal to the other module terminal and bypass the capacitor 56, and so the module 54a provides a near-zero voltage, i.e. the module 54a is configured in a bypassed mode.

The capacitor 56 of the module 54a is inserted into the chain-link converter when the switching elements 50 in the module 54a are configured to force the current in the chain-link converter to flow into and out of the capacitor 56. The capacitor 56 then charges or discharges its stored energy so as to provide a voltage step, i.e. the module 54a is configured in a non-bypassed mode. The half-bridge arrangement of the module 54a permits only positive voltage in the non-bypassed mode.

In this manner the pair of switching elements 50 is connected in parallel with the capacitor 56 in a half-bridge arrangement to define a 2-quadrant module 54a that can provide near-zero or positive voltage and can conduct current in two directions.

The configuration of the multilevel converter block 52 in this manner results in a bidirectional multilevel converter block 52 that permits current flow through the second limb portion 40 in two directions.

It is possible to build up a combined voltage across the chain-link converter, which is higher than the voltage available from each of its individual modules 54a via the insertion of the capacitors 56 of multiple modules 54a, each providing its own voltage, into the chain-link converter. In this manner switching of the switching elements 50 in each module 54a causes the chain-link converter to provide a stepped variable voltage source, which permits the generation of a voltage waveform across the chain-link converter using a step-wise approximation. As such the chain-link converter is capable of providing a wide range of complex voltage waveforms.

In use, in each converter limb 36, the multilevel converter block 52 is operable to control current flow between the AC terminal 42 and the second DC terminal 34 by configuring each module 54a in a bypassed or non-bypassed mode and thereby control current flow in the chain-link converter and therefore the second limb portion 40.

It is envisaged that, in other embodiments of the invention, each module 54a may be replaced by another type of module that includes at least one switching element and at least one energy storage device, the or each switching element and the or each energy storage device in the or each module combining to selectively provide a voltage source. In one exemplary alternative arrangement, each module 54b may include two pairs of switching elements 50 connected in parallel with an energy storage device in a full-bridge arrangement to define a 4-quadrant bipolar module 54b that can provide negative, near-zero or positive voltage and can conduct current in two directions, as shown in Figure 3c.

The first voltage source converter 30 further includes a controller 58 configured to selectively control the limb portions 38,40. More particularly, the controller 58 is configured to selectively control the operation of the switching block 48 and multilevel converter block 52.

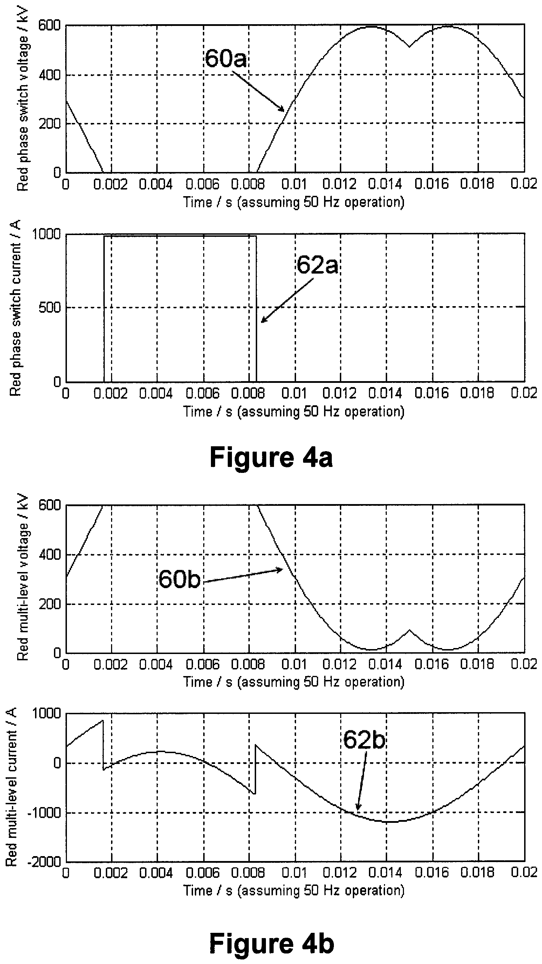

Operation of the first voltage source converter 30 of Figure 2 is described as follows, with reference to Figures 4a to 4e.

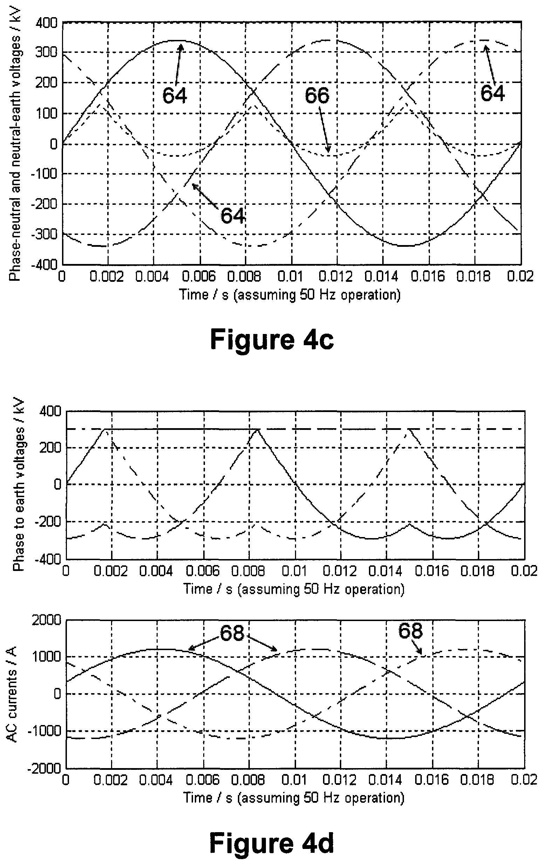

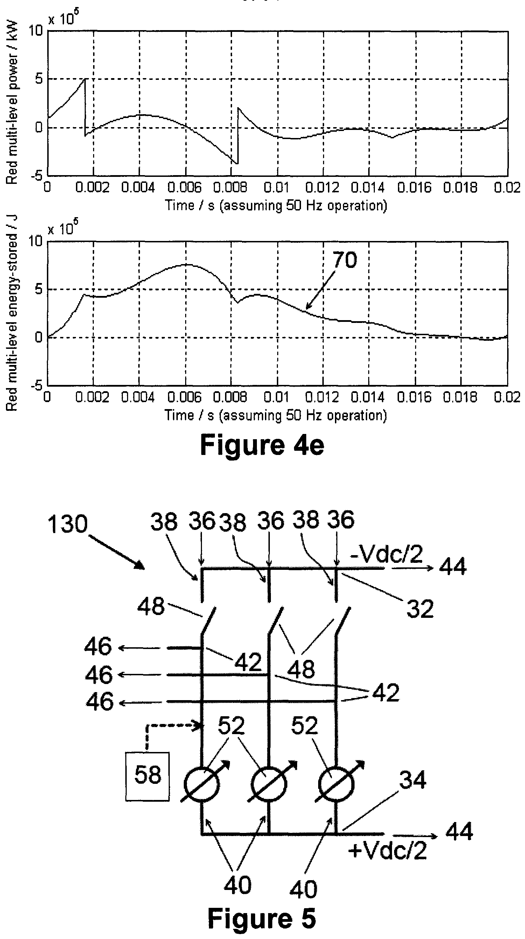

Figures 4a to 4e illustrate, in graph form, the operation of the first voltage source converter 30 of Figure 2. Figures 4a and 4b respectively illustrate, in graph form, the changes in voltage 60a,60b and current 62a,62b in the first and second limb portions 38,40 respectively during the operation of the first voltage source converter 30 to transfer power between the AC and DC electrical networks 44,46. In Figures 4c and 4d, the illustrated voltage waveforms are referenced to earth, which is defined as a mid-point between the first and second terminals of the DC electrical network 44. Figure 4e illustrates, in graph form, the changes in power and energy 70 in the second limb portion 40 during the operation of the first voltage source converter 30 to transfer power between the AC and DC electrical networks 44,46.

For the purposes of this specification, where appropriate, the operation of the first voltage source converter 30 is described with reference to one of its converter limbs 36. It will be appreciated that the described operation of one of the converter limbs 36 of the first voltage source converter 30 applies mutatis mutandis to the operation of the other two converter limbs 36.

In order to transfer power between the AC and DC electrical networks 44,46, the controller 58 controls the operation of the switching block 48 and multilevel converter block 52 to control the distribution of current flow in the first voltage source converter 30 between the limb portions 38,40.

When the switching block 48 is switched to permit current flow in the first limb portion 38, the chain-link converter is configured to steer a desired current flow through the switching block 48 while the chain-link converter itself carries a residual current necessary to cause a desired current flow at the AC terminal 42. The switching of the first limb portion 38 into circuit by way of conduction of current in the switching block 48 provides a current path that connects the first DC terminal 32 to the AC terminal 42 and thereby results in a voltage of +Vdc/2 being presented at the AC terminal 42.

The first limb portion 38 is switched into circuit to provide a current path that connects the first DC terminal 32 to the AC terminal 42 for a first period corresponding to 120 electrical degrees of a cycle of the AC electrical network 46.

After the first period has lapsed, the controller 58 controls the switching elements 50 of each module 54a in the chain-link converter to add and subtract voltage steps to reduce the current in the switching block 48 to zero. Thereafter, the controller 58 switches the switching block 48 to inhibit current flow in the first limb portion 38.

When the switching block 48 is switched to inhibit current flow in the first limb portion 38, the second limb portion 40 provides a current path that connects the second DC terminal 34 to the AC terminal 42. At this stage the first limb portion 38 is not conducting any limb portion current between the AC terminal 42 and first DC terminal 32 while the second limb portion 40 is conducting a limb portion current between the AC terminal 42 and second DC terminal 34.

The second limb portion 40 is conducting a limb portion current between the AC terminal 42 and second DC terminal 34 for a second period corresponding to 240 electrical degrees of a cycle of the AC electrical network 46. During the second period, the controller 58 controls the switching of the switching elements 50 in each module 54a of the chain-link converter to control the configuration of the AC voltage waveform at the AC terminal 42 to vary between +Vdc/2 and -Vdc/2.

After the second period has elapsed, the controller 58 controls the switching elements 50 of each module 54a in the chain-link converter to add and subtract voltage steps to, i.e. "push up" and "pull down", the AC voltage at the AC terminal 42 relative to the second DC terminal 34 to generate a voltage of +Vdc across the second limb portion 40 and thereby reduce the voltage across the switching block 48 to near-zero. Thereafter, the controller 58 switches the switching block 48 to once again permit current flow in the first limb portion 38, and controls the switching of the switching elements 50 in each module 54a of the chain-link converter to control the distribution of current flow in the first voltage source converter 30 between the limb portions 38,40, thus completing the cycle.

Over the course of each cycle of the AC electrical network 46 the controller 58 controls the switching block 48 and multilevel converter block 52 to generate a plurality of sinusoidal phase-to-neutral AC voltage waveforms 64 and a neutral-to-earth voltage waveform 66. The neutral-to-earth voltage waveform 66 is shaped to enable each AC terminal 42 to be at substantially the same potential as the first DC terminal 32 for a predefined period, as shown in Figure 4c. As indicated above, earth is defined as the mid-point between the first and second terminals of the DC electrical network 44. The generation of such phase-to-neutral and neutral-to-earth AC voltage waveforms 64,66 result in the generation of plurality of sinusoidal phase-to-phase AC voltage waveforms. The control of the limb portions 38,40 in this manner enables the first voltage source converter 30 to draw a plurality of sinusoidal AC phase currents 68 from the AC electrical network 46, as shown in Figure 4d.

In this manner the first voltage source converter 30 is capable of generating a high quality AC voltage waveform at the AC terminal 42 and thereby enable the transfer of high quality power between the AC and DC electrical networks 44,46. It will be appreciated that, in addition to the aforementioned AC voltage waveforms, the limb portions 38,40 may be controlled to generate other types of AC voltage waveforms at the AC terminals 42 depending on the requirements of the associated power application.

The inclusion of the multilevel converter block 52 in the converter limb 36 obviates the need to switch the switching block 48 at a high frequency to generate a high quality AC voltage waveform at the AC terminal 42. This not only permits a reduction in switching frequency of the switching block 48 to reduce switching losses and electromagnetic interference, but also minimises or eliminates the need for harmonic filtering hardware, thus improving the reliability and efficiency of the first voltage source converter 30. In contrast, replacing the multilevel converter block 52 with another switching block would result in the problems described earlier with reference to the conventional voltage source converters of Figures 1a and 1b.

The multilevel converter block 52 switches faster than the AC frequency of the AC electrical network 46. In contrast the switching block 48 is only required to switch on and off (i.e. switch into and out of circuit between the AC terminal 42 and the first DC terminal 32) once per cycle. Therefore, the configuration of the first voltage source converter 30 of Figure 2 invention reduces the number of modules 54a and switching events in each converter limb 36 in comparison to a converter limb of a conventional voltage source converter, an example of which is shown in Figure 1c. As such the reduction in the number of components and switching events in each converter limb 36 provides further reductions in terms of converter losses, size, weight and costs.

A reduction in converter losses resulting from the configuration of the first voltage source converter 30 of Figure 2 reduces the cooling requirements of the first voltage source converter 30, thus reducing the size, weight and cost of the associated cooling equipment.

The configuration of the first voltage source converter 30 of Figure 2 therefore results in an economical, space-saving voltage source converter with high voltage capabilities.

In addition switching the switching block 48 at near-zero voltage, which is known as soft-switching, reduces the rates of change of voltage and/or current for the switching block 48, thus reducing switching losses and electromagnetic interference for the switching block 48. Moreover, the soft-switching simplifies voltage sharing among the plurality of series-connected switching elements 50. This advantageously reduces or eliminates the need for large voltage grading snubber circuitry which would otherwise add size, weight and cost to the first voltage source converter 30.

During the operation of the first voltage source converter 30 to transfer power between the AC and DC electrical networks 44,46, the controller 58 selectively controls the switching block 48 and multilevel converter block 52 to modify the ratio of the magnitude of an AC current at the AC terminal 42 to the magnitude of a DC current at the first and second DC terminals 32,34 to minimise a net change in energy level 70 of the multilevel converter block 52 over a cycle of the AC electrical network 46, as shown in Figure 4e. At the same time the controller 58 controls the switching of the switching elements 50 in each module 54a of the chain-link converter to discretely discharge and charge each energy storage device to minimise a net change in energy level of the or each energy storage device over a cycle or a plurality of cycles of the AC electrical network 46. This may be carried out by inserting each energy storage device into the second limb portion 40 so that the limb portion current flows through each energy storage device.

The bidirectional nature of the switching block 48 and multilevel converter block 52 allows the controller 58 to selectively control the limb portions 38,40 to control the configuration of the AC voltage waveform at the AC terminal 42 so as to transfer power from the AC electrical network 46 to the DC electrical network 44 in an AC to DC power transfer mode and to transfer power from the DC electrical network 44 to the AC electrical network 46 in a DC to AC power transfer mode. The multilevel converter block 52 is rated to set the power transferable in the AC to DC power transfer mode to be equal to the power transferable in the DC to AC power transfer modes.

The configuration of the first voltage source converter 30 of Figure 2 enables the controller 58 to control the limb portions 38,40 to perform a variety of additional functions.

Optionally, during the transfer of power between the AC and DC electrical networks 44,46, the controller 58 may control the switching block 48 and multilevel converter block 52 to simultaneously switch both limb portions into circuit to form a current circulation path including the converter limb 36 and the DC electrical network 44. In particular, the controller 58 switches the switching block 48 to permit current flow in the first limb portion 38 and configures the chain-link converter to permit current flow in the second limb portion 40.

The formation of the current circulation path in this manner permits flow of a circulation current between the converter limb 36 and the DC electrical network 44, whereby the circulation current includes a DC current component.

The inclusion of the DC current component in the circulation current permits exchange energy between the multilevel converter block 52 and the DC electrical network 44. This provides a reliable means of improving the control of the multilevel converter block 52 through regulation of the voltage level of the capacitor 56 in each module 54a of the chain-link converter. This in turn permits balancing of the individual voltage levels of the capacitors 56 of the chain-link converter to simplify the control of the switching of the switching elements 50 in each module 54a of the chain-link converter by allowing, for example, the use of average voltage value as feedback to control the switching of the switching elements 50 in each module 54a of the chain-link converter.

Further optionally the circulation current flowing in the current circulation path may additionally include an AC current component. The AC current component may, for example, be shaped to minimise or cancel a ripple current in the DC electrical network 44. This allows the first voltage source converter 30 to act as an active DC filter.

The current circulation path may be intermittently formed during the operation of the first voltage source converter 30 to transfer power between the AC and DC electrical networks 44,46, without significantly affecting the overall power transfer between the AC and DC electrical networks 44,46.

If each module 54b was configured to be a 4-quadrant bipolar module 54b as shown in Figure 3c, the full-bridge arrangement of such modules 54b further provides the first voltage source converter 30 with current limiting capability.

A high fault current may be created by a fault or other abnormal operating condition occurring in the DC electrical network 44. The AC voltage of the AC electrical network 46 drives the high fault current to flow in the first voltage source converter 30 and the DC electrical network 44.

In response to an event of high fault current in the DC electrical network 44, the controller 58 controls the switching of the switching elements 50 in at least one module 54a of the chain-link converter to direct the fault current through its capacitor 56 such that the module 54a provides a voltage which opposes the flow of the fault current.

The ability to operate the first voltage source converter 30 in this manner results in a voltage source converter with in-built current limiting capability and thereby obviates the need for separate current limiting hardware to limit a flow of current created by a fault occurring in the DC electrical network 44, thus providing savings in terms of size, weight and cost.

The controller 58 may be configured to selectively control each multilevel converter block 52 to control a reverse recovery current of the corresponding switching block 48. For example, the controller 58 may be configured to selectively control the multilevel converter block 52 to control the rate of decay of on-state current and rate of application of blocking voltage of the switching block 48.

The controller 58 may be configured to selectively control at least one of the first and second limb portions 38,40 to generate a leading or lagging AC current at each AC terminal 42. More specifically, the first voltage source converter may further include at least one reactive element, and the controller 58 may be configured to selectively control at least one of the first and second limb portions 38,40 to vary a phase and/or magnitude of a voltage across the or each reactive element so as to generate a leading or lagging AC current at each AC terminal 42. This in turn enables the first voltage source converter 30 to exchange reactive power with the AC electrical network 46, thus resulting in a voltage source converter with increased power transfer functionality. The or each reactive element may be, but is not limited to, a transformer winding, a line reactor, a filter inductor, or an inductor forming part of each limb portion 38,40.

The controller 58 may selectively control the limb portions 38,40 in each converter limb 36 to define a three-phase static synchronous compensator in which the second DC terminal 34 defines the neutral point of a star configuration and the second limb portions 38,40 define the branches of the star configuration. Meanwhile the controller 58 controls the switching blocks 48 in the first limb portions 38 to inhibit current flow in the first limb portion 38s. The configuration of the limb portions 38,40 in this manner enables the first voltage source converter 30 to exchange reactive power with the AC electrical network 46 in the event that the DC electrical network 44 is offline due to an occurrence of a fault.

The AC voltage may be constructed to have a peak value which is higher than a DC voltage at the corresponding DC terminal such that the product of the voltage provided by the multilevel converter block 52 and the current flowing through the multilevel converter block 52 gives a net zero energy exchange in the multilevel converter block 52 over a cycle of the AC electrical network 46. Construction of such an AC voltage at each AC terminal 42 may be enabled, for example, through appropriate selection of an AC voltage of the AC electrical network 46, a winding ratio of an associated interfacing transformer, a DC voltage of the DC electrical network 44 and a neutral-to-earth voltage waveform.

The controller 58 may be configured to selectively switch the switching block 48 in a pulse-width modulated manner to control the configuration of the AC voltage waveform at the AC terminal 42.

It is envisaged that, in other embodiments of the invention, the multilevel converter block 52 may be replaced by another type of multilevel converter block that is capable of switching the voltage or current at its input and/or output terminals between multiple (two, three or more) levels. For example, the multilevel converter block may include a neutral point clamped converter or a flying capacitor converter.

It is also envisaged that, in other embodiments of the invention, the switching block 48 may be replaced by another type of switching block in the form of a switching apparatus that is capable of being switched to selectively permit or inhibit current flow (which, in some cases, may include fault current), in at least one direction in the corresponding limb portion.

It is further envisaged that, in other embodiments of the invention, either or each of the first and second limb portions of each converter limb may further includes an inductor connected in series between the AC terminal and the corresponding DC terminal. The inclusion of a series-connected inductor in a limb portion provides the limb portion with a current control element to enable more accurate control over the current flowing in the limb portion.

It is envisaged that, in other embodiments of the invention, the first voltage source converter may include a different number of converter limbs, wherein the AC terminal of each converter limb is connectable to a respective phase of a multi-phase AC electrical network.

It is further envisaged that, in other embodiments of the invention, the first voltage source converter may include a single converter limb wherein the AC terminal is connectable to a single-phase AC electrical network.

A second voltage source converter 130 according to a second embodiment of the invention is shown in Figure 5. The second voltage source converter 130 of Figure 5 is similar in structure and operation to the first voltage source converter 30 of Figure 2, and like features share the same reference numerals.

The second voltage source converter 130 differs from the first voltage source converter 30 in that, the first and second DC terminals 32,34 of each converter limb 36 are respectively connected to the second and first terminals of a DC electrical network 44, the first terminal carrying a positive DC voltage of +Vdc/2 and the second terminal carrying a negative DC voltage of -Vdc/2. In other words, each converter limb 36 is "inverted" with respect to the DC electrical network 44.

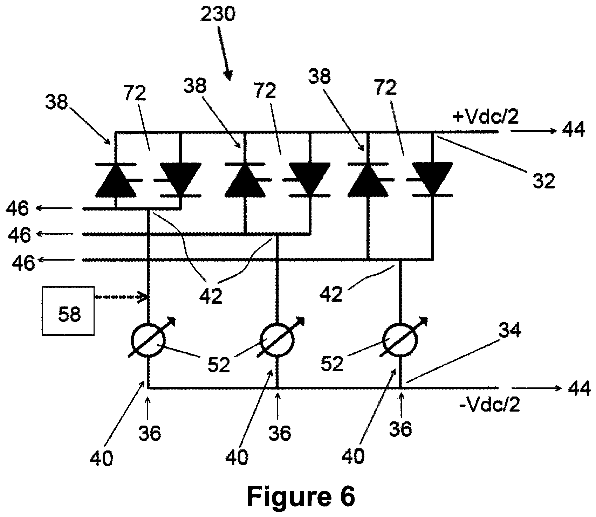

A third voltage source converter 230 according to a third embodiment of the invention is shown in Figure 6. The third voltage source converter 230 of Figure 6 is similar in structure and operation to the first voltage source converter 30 of Figure 2, and like features share the same reference numerals.

The third voltage source converter 230 differs from the first voltage source converter 30 in that, in the third voltage source converter 230, each switching block 72 includes a bidirectional switching element in the form of a pair of anti-parallel thyristors. It is envisaged that, in other embodiments of the invention, the bidirectional switching element may be in the form of a series string of anti-parallel pairs of thyristors or a pair of anti-parallel series strings of thyristors. In this manner each switching block 72 is configured as a bidirectional switching block 72 to selectively permit and inhibit current flow through the corresponding first limb portion 38 to two directions
The operation of the third voltage source converter 230 differs from the operation of the first voltage source converter 30 in that, when the switching block 72 is required to conduct so as permit current flow in the first limb portion 38, the controller 58 triggers conduction of one of the pair of anti-parallel thyristors depending on the desired direction of current flow. Once the triggered thyristor starts conducting current, the third voltage source converter 230 can rely on that thyristor to maintain conduction until the current reduces to near zero.

It is envisaged that, in other embodiments of the third voltage source converter, the thyristor with a cathode connected to the first DC terminal may be replaced by a passive current check element in the form of a diode. In this case, when the switching block is required to conduct so as to permit current flow in the first limb portion from the first DC terminal into the switching block, the controller 58 triggers conduction of the thyristor of the anti-parallel pair of thyristor and diode. Once the triggered thyristor starts conducting current, the third voltage source converter can rely on that thyristor to maintain conduction until the current reduces to near zero.

The use of the thyristors in each switching block 72 not only improves the robustness of the corresponding limb portion 38, but also makes that limb portion 38 capable of withstanding surge currents that might occur as a result of faults in the DC electrical network 44 due to their construction. This provides the third voltage source converter 230 with a simple and reliable means of blocking a fault current flowing through the third voltage source converter 230, thus obviating the need to operate the multilevel converter block 52 to block the fault current.

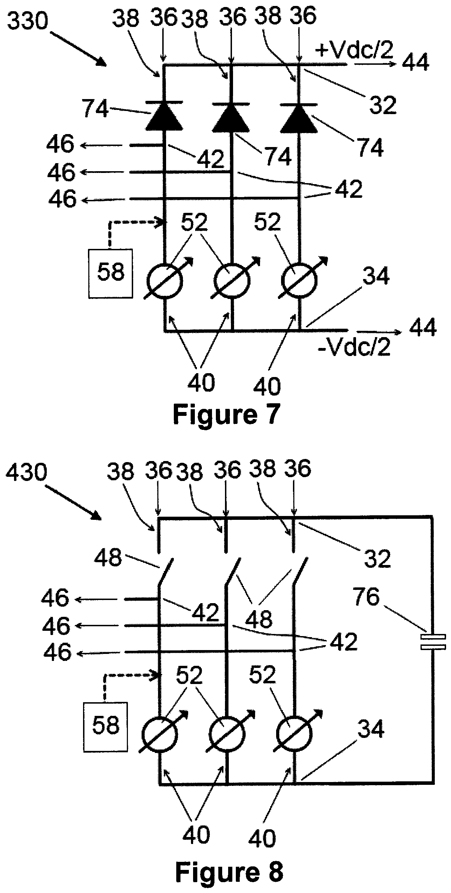

A fourth voltage source converter 330 according to a fourth embodiment of the invention is shown in Figure 7. The fourth voltage source converter 330 of Figure 7 is similar in structure and operation to the third voltage source converter 230 of Figure 6, and like features share the same reference numerals.

The fourth voltage source converter 330 differs from the third voltage source converter 230 in that, in the fourth voltage source converter 330, each switching block 74 includes a passive current check element in the form of a diode. In this manner each switching block 74 is configured as a unidirectional switching block 74 to limit current flow through the corresponding first limb portion 38 to a single direction.

In use, the fourth voltage source converter 330 is operable to transfer power from the AC electrical network 46 to the DC electrical network 44 in an AC to DC power transfer mode. The operation of the third voltage source converter 230 in the AC to DC power transfer mode is similar to the earlier-described operation of the first voltage source converter 30 in the AC to DC power transfer mode except that the controller 58 is not configured to control each switching block 74.

The configuration of the fourth voltage source converter 330 in the manner set out above therefore creates a voltage source converter with an asymmetrical power transfer functionality, in which the voltage source converter provides full power transfer functionality in one direction and provides no power transfer in the other direction.

A voltage source converter with an asymmetrical power transfer functionality is perfectly acceptable in certain power transfer applications with asymmetrical power transfer requirements. For example, the fourth voltage source converter 330 with an asymmetrical power transfer functionality may be used in power transfer applications where there is a heavy bias towards the export of power and a minimal need to import power, such as arises in renewable wind and tidal power generation where the required power transfer is predominantly from the source to a distribution grid. The configuration of the switching block 74 and multilevel converter block 52 to create a fourth voltage source converter 330 with an asymmetrical power transfer functionality results in a more optimal voltage source converter for power transfer applications with asymmetrical power transfer requirements, in terms of losses, efficiency, size, weight and cost.

A static synchronous compensator according to a fifth embodiment of the invention is shown in Figure 8.

The static synchronous compensator comprises a voltage source converter 430 that is similar in structure to the first voltage source converter 30 of Figure 2, and like features share the same reference numerals.

In use, the first and second DC terminals 32,34 of the voltage source converter 430 are connected across a DC link capacitor 76, and the AC terminal 42 of each converter limb 36 is connected to a respective phase of a three-phase AC electrical network 46.

Operation of the static synchronous compensator to absorb or provide reactive power to the phases of the AC electrical network 46 may be carried out in a similar manner as the operation of the first voltage source converter 30 to transfer power between the AC and DC electrical networks 44,46.

The configuration of the static synchronous compensator according to the invention therefore results in an economical, space-saving static synchronous compensator with high voltage capabilities.

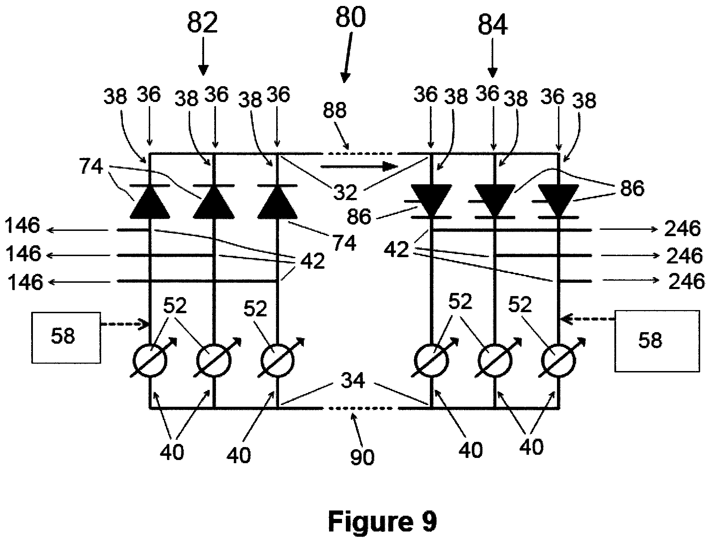

An AC to AC converter assembly 80 according to a sixth embodiment of the invention is shown in Figure 9.

The AC to AC converter assembly 80 includes a rectifier 82 and an inverter 84.

The rectifier 82 is similar in structure and operation to the fourth voltage source converter 330 of Figure 7, the inverter 84 is similar in structure and operation to the third voltage source converter 230 of Figure 6, and like features share the same reference numerals. The inverter 84 differs from the third voltage source converter 230 of Figure 6 in that, in the inverter, each switching block 86 includes a switching element in the form of a single thyristor. In other embodiments of the invention, it is envisaged that each switching element may be in the form of a plurality of series-connected thyristors.

The first DC terminals 32 of the rectifier and inverter 82,84 are interconnected via a first transmission link 88. The second DC terminals 34 of the rectifier and inverter 82,84 are interconnected via a second transmission link 90.

In use, the AC terminal 42 of each converter limb 36 of the rectifier 82 is connected to a respective phase of a first, three-phase AC electrical network 146, and the AC terminal 42 of each converter limb 36 of the inverter 84 is connected to a respective phase of a second, three-phase AC electrical network 246.

The arrangement of the AC to AC converter assembly 80 in this manner results in a small, lightweight, inexpensive, efficient and reliable means of connecting AC electrical networks 146,246 and transferring high quality power therebetween.

The use of a thyristor in each switching block 86 of the inverter 84 provides the switching blocks 86 of the inverter 84 with fault blocking capability, thus obviating the need to operate the multilevel converter blocks 52 of the inverter 84 to block a fault current flowing through the inverter 84.

It is envisaged that, in other embodiments of the invention, the passive current check element of each switching block of the rectifier is replaced by a single thyristor or a plurality of series-connected thyristors so as to also provide the switching blocks of the rectifier with fault blocking capability.

It is also envisaged that, in other embodiments of the invention, the AC to AC converter assembly may further include a transformer or two transformers. The or each transformer may be used as an interface between an AC electrical network and the AC terminals of the corresponding rectifier or inverter.

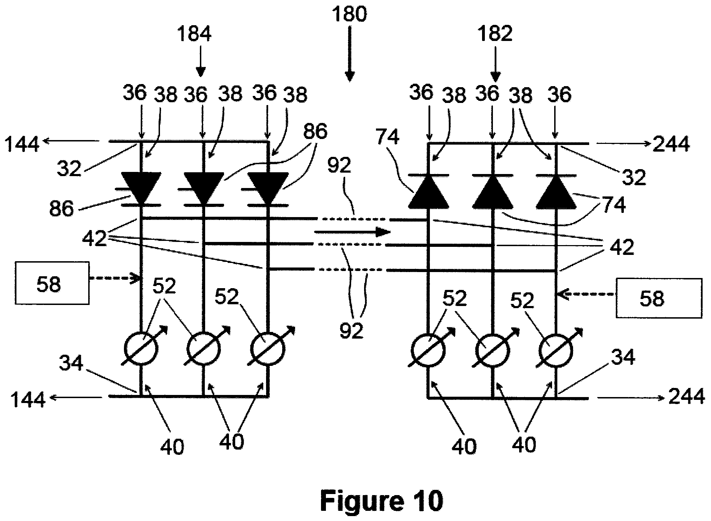

Filtering, protection and transmission components may be connected between the rectifier and inverter so as to adapt the AC to AC converter assembly 80 of Figure 10 into an HVDC transmission scheme.

A DC to DC converter assembly 180 according to a seventh embodiment of the invention is shown in Figure 10.

The DC to DC converter assembly 180 includes an inverter 184 and rectifier 182.

The inverter 184 is similar in structure and operation to the inverter 84 of the AC to AC converter assembly 80 of Figure 10, the rectifier 182 is similar in structure and operation to the rectifier 82 of the AC to AC converter assembly 80 of Figure 10, and like features share the same reference numerals.

Each AC terminal 42 of the inverter 184 is connected to a respective one of the AC terminals 42 of the rectifier 182 via a respective transmission link 92.

In use, the first and second DC terminals 32,34 of the inverter 184 are connected to a first DC electrical network 144, and the first and second DC terminals 32,34 of the rectifier 182 are connected to a second DC electrical network 244.

The arrangement of the DC to DC converter assembly 180 in this manner results in a small, lightweight, inexpensive, efficient and reliable means of connecting DC electrical networks 144,244 and transferring high quality power therebetween.

It is also envisaged that, in other embodiments of the invention, the DC to DC converter assembly may further include a transformer, each AC terminal of the inverter being further connected to a respective one of the AC terminals of the rectifier via the transformer.

It is further envisaged that, in other embodiments of the invention, each active switching device may be replaced by a plurality of parallel-connected active switching devices, and each passive current check device may be replaced by a plurality of parallel-connected passive current check devices. This increases the current rating of the corresponding voltage source converter and converter assembly.

## Claims

1. A voltage source converter (30;130;230;330;430) comprising:
first and second DC terminals (32,34) for connection to a DC electrical network; and
a converter limb (36) directly connected between the first and second DC terminals (32,34), the converter limb (36) including:
an AC terminal (42) for connection to an AC electrical network (46);
a first limb portion (38) directly connected between the first DC terminal (32) and the AC terminal (42); and
a second limb portion (40) directly connected between the second DC terminal (34) and the AC terminal (42),
**characterised in that** only one of the first and second limb portions (38,40) includes a multilevel converter block (52), the other of the first and second limb portions (38,40) including a switching block (48;72;74), the switching block (48;72;74) being switchable to selectively permit current flow in at least one direction in the corresponding limb portion and inhibit current flow in at least one direction in the corresponding limb portion, and at least one of the first and second limb portions (38,40) being controllable to control the configuration of an AC voltage waveform at the AC terminal (42).

2. A voltage source converter (30;130;230;330;430) according to any preceding claim wherein the multilevel converter block (52) includes a neutral point clamped converter or a flying capacitor converter.

3. A voltage source converter (30;130;230;330;430) according to any preceding claim wherein the multilevel converter block (52) includes at least one module (54a), the or each module (54a) including at least one switching element (50) and at least one energy storage device (56), the or each switching element (50) and the or each energy storage device (56) in the or each module (54a) selectively combining to provide a voltage source.

4. A voltage source converter (30;130;230;330;430) according to Claim 3 wherein the multilevel converter block (52) includes a plurality of series-connected modules (54a).

5. A voltage source converter (30;130;230;330;430) according to any preceding claim wherein the switching block (48;72;74) includes a passive current check element and/or an active switching element.

6. A voltage source converter (30;130;230;330;430) according to any preceding claim wherein the switching block (48;72;74) is configured either as a unidirectional switching block (48) to limit current flow through the corresponding limb portion (38,40) to a single direction or a bidirectional switching block to permit current flow through the corresponding limb portion (38,40) in two directions, and/or the multilevel converter block (52) is configured as a bidirectional multilevel converter block to permit current flow through the corresponding limb portion (38,40) in two directions.

7. A voltage source converter (30;130;230;330;430) according to any preceding claim wherein either or each of the first and second limb portions (38,40) of the converter limb (36) further includes an inductor connected in series between the AC terminal (42) and the corresponding DC terminal (32,34).

8. A voltage source converter (30;130;230;330;430) according to any preceding claim including a plurality of converter limbs (36), the AC terminal (42) of each converter limb (36) being connectable to a respective phase of a multi-phase AC electrical network (46), wherein only one of the first and second limb portions (38,40) of each converter limb (36) includes a multilevel converter block (52), and the other of the first and second limb portions (38,40) of each converter limb (36) includes a switching block (48).

9. A voltage source converter (30;130;230;330;430) according to any preceding claim including a controller (58) configured to selectively control at least one of the first and second limb portions (38,40).

10. A voltage source converter (30;130;230;330;430) according to Claim 9 wherein the controller (58) is configured to selectively control at least one of the first and second limb portions (38,40) to control the configuration of the AC voltage waveform at the corresponding AC terminal (42) so as to transfer power from the AC electrical network (46) to the DC electrical network (44) in an AC to DC power transfer mode and to transfer power from the DC electrical network (44) to the AC electrical network (46) in a DC to AC power transfer mode, wherein the multilevel converter block (52) is configured to set the power transferable in one of the AC to DC and DC to AC power transfer modes to be equal to or different than the power transferable in the other of the AC to DC and DC to AC power transfer modes.

11. A voltage source converter (30;130;230;330;430) according to Claim 9 or Claim 10 wherein the controller (58) is configured to selectively switch the switching block (48) into and out of circuit between the AC terminal (42) and the corresponding DC terminal (32,34) once over a cycle of the AC electrical network (46).

12. A voltage source converter (30; 130;230;330;430) according to any of Claims 9 to 11 when dependent from Claim 8, wherein the controller (58) is configured to selectively control at least one of the first and second limb portions (38,40) to control the configuration of the AC voltage waveform at the corresponding AC terminal (42) so as to generate a plurality of sinusoidal phase-to-phase AC voltage waveforms.

13. A voltage source converter (30;130;230;330;430) according to Claim 12 wherein the controller (58) is configured to selectively control at least one of the first and second limb portions (38,40) to control the configuration of the AC voltage waveform at the corresponding AC terminal (42) to generate a plurality of sinusoidal phase-to-neutral AC voltage waveforms and a neutral-to-earth voltage waveform, the neutral-to-earth voltage waveform being shaped to enable each AC terminal (42) to be at substantially the same potential as the first or second DC terminal (32,34) for a predefined period.

14. A voltage source converter (30; 130;230;330;430) according to any of Claims 9 to 13 wherein the controller (58) is configured to selectively switch the switching block (48) in a pulse-width modulated manner to control the configuration of the AC voltage waveform at the AC terminal (42).

15. A voltage source converter (30; 130;230;330;430) according to any of Claims 9 to 14 wherein the controller (58) is configured to selectively control the multilevel converter block (52) to minimise the voltage across the switching block (48;72;74) prior to the switching of the switching block (48;72;74) into or out of circuit between the AC terminal (42) and the corresponding DC terminal (32,34).

16. A voltage source converter (30; 130;230;330;430) according to any of Claims 9 to 15 wherein the controller (58) is configured to simultaneously switch both limb portions (38,40) into circuit to form a current circulation path including the converter limb (38,40) and the DC electrical network (44).

17. A voltage source converter (30;130;230;330;430) according to Claim 16 wherein the controller (58) is configured to switch the switching block (48;72;74) and multilevel converter block (52) to permit flow of a circulation current in the current circulation path, the circulation current including a DC current component to exchange energy between the multilevel converter block (52) and the DC electrical network (44).

18. A voltage source converter (30;130;230;330;430) according to Claim 16 or Claim 17 wherein the controller (58) is configured to switch the switching block (48;72;74) and multilevel converter block (52) to permit flow of a circulation current in the current circulation path, the circulation current including an AC current component.

19. A voltage source converter (30;130;230;330;430) according to Claim 18 wherein the AC current component is shaped to minimise or cancel a ripple current in the DC electrical network (44).

20. A voltage source converter (30; 130;230;330;430) according to any of Claims 9 to 19 wherein the controller (58) is configured to selectively control the multilevel converter block (52) to construct, at the AC terminal (42), an AC voltage with a peak value which is higher than a DC voltage at the corresponding DC terminal (32,34).

21. A voltage source converter (30;130;230;330;430) according to any of Claims 9 to 20 when dependent from Claim 3 or Claim 4, wherein the controller (58) is configured to selectively control at least one of the first and second limb portions (38,40) to modify the ratio of the magnitude of an AC current at the AC terminal (42) to the magnitude of a DC current at the first and second DC terminals (32,34) to minimise a net change in energy level of the multilevel converter block (52) over a cycle or a plurality of cycles of the AC electrical network (46).

22. A voltage source converter (30; 130;230;330;430) according to any of Claims 9 to 21 when dependent from Claim 3 or Claim 4, wherein the controller (58) is configured to selectively control the multilevel converter block (52) to discretely discharge and charge the or each energy storage device (56) to minimise a net change in energy level of the or each energy storage device (56) over a cycle or a plurality of cycles of the AC electrical network (46) whilst at least one of the first and second limb portions (38,40) is controlled to control the configuration of the AC voltage waveform at the AC terminal (42).

23. A voltage source converter (30;130;230;330;430) according to any of Claims 9 to 22 wherein the controller (58) is configured to selectively control the multilevel converter block (52) to control a reverse recovery current of the switching block (48;72;74).

24. A voltage source converter (30; 130;230;330;430) according to any of Claims 9 to 23 wherein the controller (58) is configured to selectively control the multilevel converter block (52) to provide a voltage which opposes a flow of current created by a fault occurring, in use, in the DC electrical network (44).

25. A voltage source converter (30; 130;230;330;430) according to any of Claims 9 to 24 further including at least one reactive element wherein the controller (58) is configured to selectively control at least one of the limb portions (38,40) to modify a phase and/or magnitude of a voltage across the or each reactive element so as to generate a leading or lagging AC current at the AC terminal (42).

26. A voltage source converter (430) according to any of Claims 9 to 25 when dependent from Claim 8, wherein the controller (58) is configured to selectively control at least one of the first and second limb portions (38,40) to define a multi-phase static synchronous compensator in which the first or second DC terminal (32,34) defines the neutral point of a star configuration and the corresponding limb portions (38,40) define the branches of the star configuration.

27. A static synchronous compensator comprising a voltage source converter (430) according to any of Claims 1 to 26.

28. An AC to AC converter assembly (80) for interconnecting AC electrical networks (146,246), the AC to AC converter assembly comprising a rectifier (82) and an inverter (84), each of the rectifier (82) and inverter (84) including first and second DC terminals (32,34) and at least one AC terminal (42), the or each AC terminal (42) of the rectifier (82) being connectable to a first AC electrical network (146), the or each AC terminal (42) of the inverter (84) being connectable to a second AC electrical network (246), either or each of the rectifier (82) and inverter (84) being a voltage source converter (230;330) according to any of Claims 1 to 26, wherein the first DC terminals (32) of the rectifier (82) and inverter (84) are interconnected via a first transmission link (88), and the second DC terminals (34) of the rectifier (82) and inverter (84) are interconnected via a second transmission link (90).

29. A DC to DC converter assembly (180) for interconnecting DC electrical networks (144,244), the DC to DC converter assembly (180) comprising an inverter (184) and a rectifier (182), each of the inverter (184) and rectifier (182) including first and second DC terminals (32,34) and at least one AC terminal (42), the DC terminals (32,34) of the inverter (184) being connectable to a first DC electrical network (144), the DC terminals (32,34) of the rectifier (182) being connectable to a second DC electrical network (244), either or each of the inverter (184) and rectifier (182) being a voltage source converter (230;330) according to any of Claims 1 to 26, wherein the AC terminals (42) of the inverter (184) and rectifier (182) are interconnected via a transmission link (92) or a plurality of transmission links.

## Patentansprüche

1. Spannungsquellenwandler (30; 130; 230; 330; 430), umfassend:
erste und zweite Gleichspannungsklemmen (32, 34) für die Verbindung mit einem elektrischen Gleichspannungsnetzwerk; und
einen Wandlerschenkel (36), welcher direkt zwischen der ersten und zweiten Gleichspannungsklemme (32, 34) verbunden ist, wobei der Wandlerschenkel (36) umfasst:
eine Wechselspannungsklemme (42) für die Verbindung mit einem elektrischen Wechselspannungsnetzwerk (46);
einen ersten Schenkelabschnitt (38), welcher direkt zwischen der ersten Gleichspannungsklemme (32) und der Wechselspannungsklemme (42) verbunden ist; und
einen zweiten Schenkelabschnitt (40), welcher direkt zwischen der zweiten Gleichspannungsklemme (34) und der Wechselspannungsklemme (42) verbunden ist,
**dadurch gekennzeichnet, dass** nur einer von dem ersten und zweiten Schenkelabschnitt (38, 40) einen Mehrstufen-Wandlerblock (52) beinhaltet, wobei der andere von dem ersten und zweiten Schenkelabschnitt (38, 40) einen Schaltblock (48; 72; 74) beinhaltet, wobei der Schaltblock (48; 72; 74) schaltbar ist, um selektiv Stromfluss in zumindest einer Richtung in dem entsprechenden Schenkelabschnitt zu erlauben, und zumindest einer von dem ersten und zweiten Schenkelabschnitt (38, 40) steuerbar ist, um die Konfiguration einer Wechselspannungswellenform an der Wechselspannungsklemme (42) zu steuern.

2. Spannungsquellenwandler (30; 130; 230; 330; 430) nach einem der vorstehenden Ansprüche, wobei der Mehrstufen-Wandlerblock (52) einen nullpunktblockierten Wandler oder einen Flying-Capacitor-Wandler beinhaltet.

3. Spannungsquellenwandler (30; 130; 230; 330; 430) nach einem der vorstehenden Ansprüche, wobei der Mehrstufen-Wandlerblock (52) zumindest ein Modul (54a) beinhaltet, wobei das bzw. jedes Modul (54a) zumindest ein Schaltelement (50) und zumindest eine Energiespeichervorrichtung (56) beinhaltet, wobei das bzw. jedes Schaltelement (50) und die bzw. jede Energiespeichervorrichtung (56) in dem bzw. jedem Modul (54a) selektiv kombiniert werden, um eine Spannungsquelle bereitzustellen.

4. Spannungsquellenwandler (30; 130; 230; 330; 430) nach Anspruch 3, wobei der Mehrstufen-Wandlerblock (52) eine Vielzahl von in Serie verbundenen Modulen (54a) beinhaltet.

5. Spannungsquellenwandler (30; 130; 230; 330; 430) nach einem der vorstehenden Ansprüche, wobei der Schaltblock (48; 72; 74) ein passives Stromprüfelement und/oder ein aktives Schaltelement beinhaltet.

6. Spannungsquellenwandler (30; 130; 230; 330; 430) nach einem der vorstehenden Ansprüche, wobei der Schaltblock (48; 72; 74) entweder als ein unidirektionaler Schaltblock (48) zum Begrenzen von Stromfluss durch den entsprechenden Schenkelabschnitt (38, 40) auf eine einzelne Richtung oder als ein bidirektionaler Schaltblock zum Erlauben von Stromfluss durch den entsprechenden Schenkelabschnitt (38, 40) in zwei Richtungen konfiguriert ist, und/oder der Mehrstufen-Wandlerblock (52) als ein bidirektionaler Mehrstufen-Wandlerblock zum Erlauben von Stromfluss durch den entsprechenden Schenkelabschnitt (38, 40) in zwei Richtungen konfiguriert ist.

7. Spannungsquellenwandler (30; 130; 230; 330; 430) nach einem der vorstehenden Ansprüche wobei ein oder beide von dem ersten und zweiten Schenkelabschnitt (38, 40) von dem Wandlerschenkel (36) weiter eine Induktivität beinhaltet, welche in Serie zwischen der Wechselspannungsklemme (42) und der entsprechenden Gleichspannungsklemme (32, 34) verbunden ist.

8. Spannungsquellenwandler (30; 130; 230; 330; 430) nach einem der vorstehenden Ansprüche, eine Vielzahl von Wandlerschenkeln (36) beinhaltend, wobei die Wechselspannungsklemme (42) von jedem Wandlerschenkel (36) mit einer entsprechenden Phase eines mehrphasigen elektrischen Wechselspannungsnetzwerks (46) verbindbar ist, wobei nur einer von dem ersten und zweiten Schenkelabschnitt (38, 40) von jedem Wandlerschenkel (36) einen Mehrstufen-Wandlerblock (52) beinhaltet, und der andere von dem ersten und zweiten Schenkelabschnitt (38, 40) von jedem Wandlerschenkel (36) einen Schaltblock (48) beinhaltet.

9. Spannungsquellenwandler (30; 130; 230; 330; 430) nach einem der vorstehenden Ansprüche, eine Steuerung (58) beinhaltend, welche konfiguriert ist, zumindest einen von dem ersten und zweiten Schenkelabschnitt (38, 40) selektiv zu steuern.

10. Spannungsquellenwandler (30; 130; 230; 330; 430) nach Anspruch 9, wobei die Steuerung (58) konfiguriert ist, zumindest einen von dem ersten und zweiten Schenkelabschnitt (38, 40) selektiv zu steuern, um die Konfiguration der Wechselspannungswellenform an der entsprechenden Wechselspannungsklemme (42) zu steuern, um Strom von dem elektrischen Wechselspannungsnetzwerk (46) an das elektrische Gleichspannungsnetzwerk (44) in einem Wechselspannung-auf-Gleichspannung-Stromübertragungsmodus zu übertragen, und Strom von dem elektrischen Gleichspannungsnetzwerk (44) an das elektrische Wechselspannungsnetzwerk (46) in einem Gleichspannung-auf-Wechselspannung-Stromübertragungsmodus zu übertragen, wobei der Mehrstufen-Wandlerblock (52) konfiguriert ist, den übertragbaren Strom in einem von dem Wechselspannung-auf-Gleichspannung- und Gleichspannung-auf-Wechselspannung-Stromübertragungsmodus so einzustellen, dass er gleich oder unterschiedlich wie der übertragbare Strom in dem anderen von dem Wechselspannung-auf-Gleichspannung- und Gleichspannung-auf-Wechselspannung-Stromübertragungsmodus ist.

11. Spannungsquellenwandler (30; 130; 230; 330; 430) nach Anspruch 9 oder Anspruch 10, wobei die Steuerung (58) konfiguriert ist, den Schaltblock (48) in den und aus dem Schaltkreis zwischen der Wechselspannungsklemme (42) und der entsprechenden Gleichspannungsklemme (32, 34) während eines Zyklus des elektrischen Wechselspannungsnetzwerks (46) einmal selektiv zu schalten.

12. Spannungsquellenwandler (30; 130; 230; 330; 430) nach einem der Ansprüche 9 bis 11, wenn abhängig von Anspruch 8, wobei die Steuerung (58) konfiguriert ist, zumindest einen von dem ersten und zweiten Schenkelabschnitt (38, 40) selektiv zu steuern, um die Konfiguration der Wechselspannungswellenform an der entsprechenden Wechselspannungsklemme (42) zu steuern, um eine Vielzahl von sinusförmigen Dreieckswechselspannungswellenformen zu erzeugen.

13. Spannungsquellenwandler (30; 130; 230; 330; 430) nach Anspruch 12, wobei die Steuerung (58) konfiguriert ist, zumindest einen von dem ersten und zweiten Schenkelabschnitt (38, 40) selektiv zu steuern, um die Konfiguration der Wechselspannungswellenform an der entsprechenden Wechselspannungsklemme (42) zu steuern, um eine Vielzahl von sinusförmigen Sternwechselspannungswellenformen und eine Nullleiter-Erde-Spannungswellenform zu erzeugen, wobei die Nullleiter-Erde-Spannungswellenform geformt ist, jede Wechselspannungsklemme (42) zu aktivieren, sodass sie für eine vorbestimmte Zeitspanne im Wesentlichen dasselbe Potenzial aufweist wie die erste oder zweite Gleichspannungsklemme (32, 34).

14. Spannungsquellenwandler (30; 130; 230; 330; 430) nach einem der Ansprüche 9 bis 13, wobei die Steuerung (58) konfiguriert ist, um den Schaltblock (48) auf eine pulsweitenmodulierte Art selektiv zu schalten, um die Konfiguration der Wechselspannungswellenform an der Wechselspannungsklemme (42) zu steuern.

15. Spannungsquellenwandler (30; 130; 230; 330; 430) nach einem der Ansprüche 9 bis 14, wobei die Steuerung (58) konfiguriert ist, den Mehrstufen-Wandlerblock (52) selektiv zu steuern, um die Spannung über den Schaltblock (48; 72; 74) vor dem Schalten des Schaltblocks (48; 72; 74) in den oder aus dem Schaltkreis zwischen der Wechselspannungsklemme (42) und der entsprechenden Gleichspannungsklemme (32, 34) zu minimieren.

16. Spannungsquellenwandler (30; 130; 230; 330; 430) nach einem der Ansprüche 9 bis 15, wobei die Steuerung (58) konfiguriert ist, um beide Schenkelabschnitte (38, 40) gleichzeitig in den Schaltkreis zu schalten, um einen Stromkreislaufpfad zu bilden, welcher den Wandlerschenkel (38, 40) und das elektrische Gleichspannungsnetzwerk (44) beinhaltet.

17. Spannungsquellenwandler (30; 130; 230; 330; 430) nach Anspruch 16, wobei die Steuerung (58) konfiguriert ist, den Schaltblock (48; 72; 74) und Mehrstufen-Wandlerblock (52) zu schalten, um Fluss eines Kreislaufstroms in dem Stromkreislaufpfad zu erlauben, wobei der Kreislaufstrom eine Gleichstromkomponente beinhaltet, um Energie zwischen dem Mehrstufen-Wandlerblock (52) und dem elektrischen Gleichspannungsnetzwerk (44) auszutauschen.

18. Spannungsquellenwandler (30; 130; 230; 330; 430) nach Anspruch 16 oder Anspruch 17, wobei die Steuerung (58) konfiguriert ist, den Schaltblock (48; 72; 74) und Mehrstufen-Wandlerblock (52) zu schalten, um Fluss eines Kreislaufstroms in dem Stromkreislaufpfad zu erlauben, wobei der Kreislaufstrom eine Wechselstromkomponente beinhaltet.

19. Spannungsquellenwandler (30; 130; 230; 330; 430) nach Anspruch 18, wobei die Wechselstromkomponente geformt ist, um einen Wellenstrom in dem elektrischen Gleichspannungsnetzwerk (44) zu minimieren oder aufzuheben.

20. Spannungsquellenwandler (30; 130; 230; 330; 430) nach einem der Ansprüche 9 bis 19, wobei die Steuerung (58) konfiguriert ist, den Mehrstufen-Wandlerblock (52) selektiv zu steuern, um an der Wechselspannungsklemme (42) eine Wechselspannung mit einer Spitzenspannung zu aufzubauen, welche höher ist als eine Gleichspannung an der entsprechenden Gleichspannungsklemme (32, 34).

21. Spannungsquellenwandler (30; 130; 230; 330; 430) nach einem der Ansprüche 9 bis 20, wenn abhängig von Anspruch 3 oder Anspruch 4, wobei die Steuerung (58) konfiguriert ist, selektiv zumindest einen von dem ersten und zweiten Schenkelabschnitt (38, 40) zu steuern, um das Verhältnis der Größenordnung eines Wechselstroms an der Wechselspannungsklemme (42) zu der Größenordnung eines Gleichstroms an der ersten und zweiten Gleichspannungsklemme (32, 34) zu modifizieren, um eine Nettoänderung im Energieniveau des Mehrstufen-Wandlerblocks (52) während eines Zyklus oder einer Vielzahl von Zyklen des elektrischen Wechselspannungsnetzwerks (46) zu minimieren.

22. Spannungsquellenwandler (30; 130; 230; 330; 430) nach einem der Ansprüche 9 bis 21, wenn abhängig von Anspruch 3 oder Anspruch 4, wobei die Steuerung (58) konfiguriert ist, den Mehrstufen-Wandlerblock (52) selektiv zu steuern, um die oder jede Energiespeichervorrichtung (56) getrennt zu entladen und zu laden, um eine Nettoänderung im Energieniveau von der oder jeder Energiespeichervorrichtung (56) während eines Zyklus oder einer Vielzahl von Zyklen des elektrischen Wechselspannungsnetzwerks (46) zu minimieren, während zumindest einer von dem ersten und zweiten Schenkelabschnitt (38, 40) gesteuert wird, um die Konfiguration der Wechselspannungswellenform an der Wechselspannungsklemme (42) zu steuern.

23. Spannungsquellenwandler (30; 130; 230; 330; 430) nach einem der Ansprüche 9 bis 22, wobei die Steuerung (58) konfiguriert ist, den Mehrstufen-Wandlerblock (52) selektiv zu steuern, um einen Sperrverzögerungsstrom des Schaltblocks (48; 72; 74) zu steuern.

24. Spannungsquellenwandler (30; 130; 230; 330; 430) nach einem der Ansprüche 9 bis 23, wobei die Steuerung (58) konfiguriert ist, den Mehrstufen-Wandlerblock (52) selektiv zu steuern, um eine Spannung bereitzustellen, welche einen Fluss von Strom behindert, welcher durch einen Fehler geschaffen wird, welcher, im Gebrauch, in dem elektrischen Gleichspannungsnetzwerk (44) auftritt.

25. Spannungsquellenwandler (30; 130; 230; 330; 430) nach einem der Ansprüche 9 bis 24, weiter zumindest ein reaktives Element umfassend, wobei die Steuerung (58) konfiguriert ist, zumindest einen von den Schenkelabschnitten (38, 40) selektiv zu steuern, um eine Phase und/oder Größenordnung einer Spannung über das oder jedes reaktive Element zu modifizieren, um einen voreilenden oder nacheilenden Wechselstrom an der Wechselspannungsklemme (42) zu erzeugen.

26. Spannungsquellenwandler (430) nach einem der Ansprüche 9 bis 25, wenn abhängig von Anspruch 8, wobei die Steuerung (58) konfiguriert ist, zumindest einen von dem ersten und zweiten Schenkelabschnitt (38, 40) selektiv zu steuern, um einen statischen synchronen Mehrphasenkompensator zu definieren, in welchem die erste oder zweite Gleichspannungsklemme (32, 34) den Nullpunkt einer Sternkonfiguration definiert, und die entsprechenden Schenkelabschnitte (38, 40) die Arme der Sternkonfiguration definieren.

27. Statischer synchroner Kompensator, umfassend einen Spannungsquellenwandler (430) nach einem der Ansprüche 1 bis 26.

28. Wechselspannung/Wechselspannung-Wandlerbaugruppe (80) zum Zusammenschalten von elektrischen Wechselspannungsnetzwerken (146, 246), wobei die Wechselspannung/Wechselspannung-Wandlerbaugruppe einen Gleichrichter (82) und einen Wechselrichter (84) umfasst, wobei jeder von dem Gleichrichter (82) und Wechselrichter (84) erste und zweite Gleichspannungsklemmen (32, 34) und zumindest eine Wechselspannungsklemme (42) beinhaltet, wobei die oder jede Wechselspannungsklemme (42) des Gleichrichters (82) mit einem ersten elektrischen Wechselspannungsnetzwerk (146) verbindbar ist, wobei die oder jede Wechselspannungsklemme (42) von dem Wechselrichter (84) mit einem zweiten elektrischen Wechselspannungsnetzwerk (246) verbindbar ist, einer oder jeder von dem Gleichrichter (82) und Wechselrichter (84) ein Spannungsquellenwandler (230, 330) nach einem der Ansprüche 1 bis 26 ist, wobei die ersten Gleichspannungsklemmen (32) von dem Gleichrichter (82) und Wechselrichter (84) über eine erste Übertragungsstrecke (88) zusammengeschaltet sind, und die zweiten Gleichspannungsklemmen (34) von dem Gleichrichter (82) und Wechselrichter (84) über eine zweite Übertragungsstrecke (90) zusammengeschaltet sind.

29. Gleichspannung/Gleichspannung-Wandlerbaugruppe (180) zum Zusammenschalten von elektrischen Gleichspannungsnetzwerken (144, 244), wobei die Gleichspannung/Gleichspannung-Wandlerbaugruppe (180) einen Wechselrichter (184) und einen Gleichrichter (182) umfasst, wobei jeder von dem Wechselrichter (184) und Gleichrichter (182) erste und zweite Gleichspannungsklemmen (32, 34) und zumindest eine Wechselspannungsklemme (42) beinhaltet, wobei die Gleichspannungsklemmen (32, 34) des Wechselrichters (184) mit einem ersten elektrischen Gleichspannungsnetzwerk (144) verbindbar sind, wobei die Gleichspannungsklemmen (32, 34) von dem Gleichrichter (182) mit einem zweiten elektrischen Gleichspannungsnetzwerk (244) verbindbar sind, einer oder jeder von dem Wechselrichter (184) und Gleichrichter (182) ein Spannungsquellenwandler (230, 330) nach einem der Ansprüche 1 bis 26 ist, wobei die Wechselspannungsklemmen (42) von dem Wechselrichter (184) und Gleichrichter (182) über eine Übertragungsstrecke (92) oder eine Vielzahl von Übertragungsstrecken zusammengeschaltet sind.

## Revendications

1. Convertisseur de source de tension (30; 130; 230; 330 ; 430) comprenant :
des première et seconde bornes CC (32, 34) pour la connexion à un réseau électrique CC ; et
une branche de convertisseur (36) directement connectée entre les première et seconde bornes CC (32, 34), la branche de convertisseur (36) incluant :
une borne CA (42) pour la connexion à un réseau électrique CA (46) ;
une première partie de branche (38) directement connectée entre la première borne CC (32) et la borne CA (42) ; et
une seconde partie de branche (40) directement connectée entre la seconde borne CC (34) et la borne CA (42),
**caractérisé en ce que** seule l'une des première et seconde parties de branche (38, 40) inclut un bloc de convertisseur multiniveau (52), l'autre des première et seconde parties de branche (38, 40) incluant un bloc de commutation (48; 72; 74), le bloc de commutation (48 ; 72; 74) pouvant être commuté pour permettre sélectivement un flux du courant dans au moins une direction dans la partie de branche correspondante et inhiber le flux du courant dans au moins une direction dans la partie de branche correspondante, et au moins l'une des première et seconde parties de branche (38, 40) pouvant être commandée pour commander la configuration d'une forme d'onde de tension CA au niveau de la borne CA (42).

2. Convertisseur de source de tension (30 ; 130; 230; 330; 430) selon l'une quelconque des revendications précédentes dans lequel le bloc de convertisseur multiniveau (52) inclut un convertisseur à point neutre serré ou un convertisseur à condensateurs flottants.

3. Convertisseur de source de tension (30 ; 130; 230; 330; 430) selon l'une quelconque des revendications précédentes dans lequel le bloc de convertisseur multiniveau (52) inclut au moins un module (54a), le ou chaque module (54a) incluant au moins un élément de commutation (50) et au moins un dispositif de stockage d'énergie (56), le ou chaque élément de commutation (50) et le ou chaque dispositif de stockage d'énergie (56) dans le ou chaque module (54a) se combinant sélectivement pour fournir une source de tension.

4. Convertisseur de source de tension (30 ; 130; 230; 330; 430) selon la revendication 3 dans lequel le bloc de convertisseur multiniveau (52) inclut une pluralité de modules connectés en série (54a).

5. Convertisseur de source de tension (30 ; 130; 230; 330; 430) selon l'une quelconque des revendications précédentes dans lequel le bloc de commutation (48 ; 72 ; 74) inclut un élément de vérification de courant passif et/ou un élément de commutation actif.

6. Convertisseur de source de tension (30 ; 130; 230; 330; 430) selon l'une quelconque des revendications précédentes dans lequel le bloc de commutation (48 ; 72; 74) est configuré soit comme un bloc de commutation unidirectionnel (48) pour limiter le flux du courant à travers la partie de branche (38, 40) correspondante à une seule direction soit comme un bloc de commutation bidirectionnel pour permettre le flux du courant à travers la partie de branche (38, 40) correspondante dans deux directions, et/ou le bloc de convertisseur multiniveau (52) est configuré comme un bloc de convertisseur multiniveau bidirectionnel pour permettre le flux du courant à travers la partie de branche (38, 40) correspondante dans deux directions.

7. Convertisseur de source de tension (30 ; 130; 230; 330; 430) selon l'une quelconque des revendications précédentes dans lequel l'une ou l'autre ou chacune des première et seconde parties de branche (38, 40) de la branche de convertisseur (36) inclut en outre une bobine d'induction connectée en série entre la borne CA (42) et la borne CC (32, 34) correspondante.

8. Convertisseur de source de tension (30; 130; 230; 330; 430) selon l'une quelconque des revendications précédentes incluant une pluralité de branches de convertisseur (36), la borne CA (42) de chaque branche de convertisseur (36) pouvant être connectée à une phase respective d'un réseau électrique CA multi phase (46), dans lequel seule l'une des première et seconde parties de branche (38, 40) de chaque branche de convertisseur (36) inclut un bloc de convertisseur multiniveau (52), et l'autre des première et seconde parties de branche (38, 40) de chaque branche de convertisseur (36) inclut un bloc de commutation (48).

9. Convertisseur de source de tension (30; 130; 230; 330; 430) selon l'une quelconque des revendications précédentes incluant un dispositif de commande (58) configuré pour commander sélectivement au moins l'une des première et seconde parties de branche (38, 40).

10. Convertisseur de source de tension (30; 130; 230; 330; 430) selon la revendication 9 dans lequel le dispositif de commande (58) est configuré pour commander sélectivement au moins l'une des première et seconde parties de branche (38, 40) pour commander la configuration de la forme d'onde de tension CA au niveau de la borne CA (42) correspondante de façon à transférer l'énergie du réseau électrique CA (46) au réseau électrique CC (44) dans un mode de transfert d'énergie CA à CC et à transférer l'énergie du réseau électrique CC (44) au réseau électrique CA (46) dans un mode de transfert d'énergie CC à CA, dans lequel le bloc de convertisseur multiniveau (52) est configuré pour régler l'énergie transférable dans l'un des modes de transfert d'énergie CA à CC et CC à CA pour qu'elle soit égale à ou différente de l'énergie transférable dans l'autre des modes de transfert d'énergie CA à CC et CC à CA.

11. Convertisseur de source de tension (30; 130; 230; 330; 430) selon la revendication 9 ou la revendication 10 dans lequel le dispositif de commande (58) est configuré pour commuter sélectivement le bloc de commutation (48) dans et hors du circuit entre la borne CA (42) et la borne CC (32, 34) correspondante une fois sur un cycle du réseau électrique CA (46).

12. Convertisseur de source de tension (30; 130; 230; 330; 430) selon l'une quelconque des revendications 9 à 11 lorsqu'elles sont dépendantes de la revendication 8, dans lequel le dispositif de commande (58) est configuré pour commander sélectivement au moins l'une des première et seconde parties de branche (38, 40) pour commander la configuration de la forme d'onde de tension CA au niveau de la borne CA (42) correspondante de façon à générer une pluralité de formes d'onde de tension CA phase-phase sinusoïdales.

13. Convertisseur de source de tension (30; 130; 230; 330; 430) selon la revendication 12 dans lequel le dispositif de commande (58) est configuré pour commander sélectivement au moins l'une des première et seconde parties de branche (38, 40) pour commander la configuration de la forme d'onde de tension CA au niveau de la borne CA (42) correspondante pour générer une pluralité de formes d'onde de tension CA phase-neutre sinusoïdales et une forme d'onde de tension neutre-terre, la forme d'onde de tension neutre-terre étant formée pour permettre à chaque borne CA (42) d'être sensiblement au même potentiel que la première ou la seconde borne CC (32, 34) pendant une période prédéfinie.

14. Convertisseur de source de tension (30; 130; 230; 330; 430) selon l'une quelconque des revendications 9 à 13 dans lequel le dispositif de commande (58) est configuré pour commuter sélectivement le bloc de commutation (48) d'une manière modulée en largeur d'impulsion pour commander la configuration de la forme d'onde de tension CA au niveau de la borne CA (42).

15. Convertisseur de source de tension (30; 130; 230; 330; 430) selon l'une quelconque des revendications 9 à 14 dans lequel le dispositif de commande (58) est configuré pour commander sélectivement le bloc de convertisseur multiniveau (52) pour réduire au maximum la tension à travers le bloc de commutation (48 ; 72; 74) avant la commutation du bloc de commutation (48; 72; 74) dans ou hors du circuit entre la borne CA (42) et la borne CC (32, 34) correspondante.

16. Convertisseur de source de tension (30; 130; 230; 330; 430) selon l'une quelconque des revendications 9 à 15 dans lequel le dispositif de commande (58) est configuré pour commuter simultanément les deux parties de branche (38, 40) en circuit pour former un trajet de circulation du courant incluant la branche de convertisseur (38, 40) et le réseau électrique CC (44).

17. Convertisseur de source de tension (30; 130; 230; 330; 430) selon la revendication 16 dans lequel le dispositif de commande (58) est configuré pour commuter le bloc de commutation (48; 72; 74) et le bloc de convertisseur multiniveau (52) pour permettre le flux d'un courant de circulation dans le trajet de circulation du courant, le courant de circulation incluant une composante de courant CC pour l'échange d'énergie entre le bloc de convertisseur multiniveau (52) et le réseau électrique CC (44).

18. Convertisseur de source de tension (30; 130; 230; 330; 430) selon la revendication 16 ou la revendication 17 dans lequel le dispositif de commande (58) est configuré pour commuter le bloc de commutation (48 ; 72 ; 74) et bloc de convertisseur multiniveau (52) pour permettre le flux d'un courant de circulation dans le trajet de circulation du courant, le courant de circulation incluant une composante de courant CA.

19. Convertisseur de source de tension (30; 130; 230; 330; 430) selon la revendication 18 dans lequel la composante de courant CA est formée pour réduire ou supprimer un courant ondulé dans le réseau électrique CC (44).

20. Convertisseur de source de tension (30; 130; 230; 330; 430) selon l'une quelconque des revendications 9 à 19 dans lequel le dispositif de commande (58) est configuré pour commander sélectivement le bloc de convertisseur multiniveau (52) pour construire, au niveau de la borne CA (42), une tension CA ayant une valeur de pic qui est supérieure à une tension CC au niveau de la borne CC (32, 34) correspondante.

21. Convertisseur de source de tension (30; 130; 230; 330; 430) selon l'une quelconque des revendications 9 à 20 lorsqu'elles sont dépendantes de la revendication 3 ou de la revendication 4, dans lequel le dispositif de commande (58) est configuré pour commander sélectivement au moins l'une des première et seconde parties de branche (38, 40) pour modifier le rapport de la grandeur d'un courant CA au niveau de la borne CA (42) à la grandeur d'un courant CC au niveau des première et seconde bornes CC (32, 34) pour réduire au maximum un changement net du niveau d'énergie du bloc de convertisseur multiniveau (52) sur un cycle ou une pluralité de cycles du réseau électrique CA (46).

22. Convertisseur de source de tension (30; 130; 230; 330; 430) selon l'une quelconque des revendications 9 à 21 lorsqu'elles sont dépendantes de la revendication 3 ou de la revendication 4, dans lequel le dispositif de commande (58) est configuré pour commander sélectivement le bloc de convertisseur multiniveau (52) pour décharger et charger discrètement le ou chaque dispositif de stockage d'énergie (56) pour réduire au maximum un changement net du niveau d'énergie du ou de chaque dispositif de stockage d'énergie (56) sur un cycle ou une pluralité de cycles du réseau électrique CA (46) tandis qu'au moins l'une des première et seconde parties de branche (38, 40) est commandée pour commander la configuration de la forme d'onde de tension CA au niveau de la borne CA (42).

23. Convertisseur de source de tension (30; 130; 230; 330; 430) selon l'une quelconque des revendications 9 à 22 dans lequel le dispositif de commande (58) est configuré pour commander sélectivement le bloc de convertisseur multiniveau (52) pour commander un courant de régénération inverse du bloc de commutation (48 ; 72 ; 74).

24. Convertisseur de source de tension (30; 130; 230; 330; 430) selon l'une quelconque des revendications 9 à 23 dans lequel le dispositif de commande (58) est configuré pour commander sélectivement le bloc de convertisseur multiniveau (52) pour fournir une tension qui oppose un flux de courant créé par une défaillance se produisant, lors de l'utilisation, dans le réseau électrique CC (44).

25. Convertisseur de source de tension (30; 130; 230; 330; 430) selon l'une quelconque des revendications 9 à 24 incluant en outre au moins un élément réactif dans lequel le dispositif de commande (58) est configuré pour commander sélectivement au moins l'une des parties de branche (38, 40) pour modifier une phase et/ou grandeur d'une tension à travers le ou chaque élément réactif de façon à générer un courant CA en avance ou en retard au niveau de la borne CA (42).

26. Convertisseur de source de tension (430) selon l'une quelconque des revendications 9 à 25 lorsqu'elles sont dépendantes de la revendication 8, dans lequel le dispositif de commande (58) est configuré pour commander sélectivement au moins l'une des première et seconde parties de branche (38, 40) pour définir un compensateur synchrone statique multi phase dans lequel la première ou la seconde borne CC (32, 34) définit le point neutre d'une configuration en étoile et les parties de branche (38, 40) correspondantes définissent les branches de la configuration en étoile.

27. Compensateur synchrone statique comprenant un convertisseur de source de tension (430) selon l'une quelconque des revendications 1 à 26.

28. Ensemble convertisseur CA-CA (80) pour interconnecter des réseaux électriques CA (146, 246), l'ensemble convertisseur CA-CA comprenant un redresseur (82) et un inverseur (84), chacun du redresseur (82) et de l'inverseur (84) incluant des première et seconde bornes CC (32, 34) et au moins une borne CA (42), la ou chaque borne CA (42) du redresseur (82) pouvant être connectée à un premier réseau électrique CA (146), la ou chaque borne CA (42) de l'inverseur (84) pouvant être connectée à un second réseau électrique CA (246), l'un ou l'autre ou chacun du redresseur (82) et de l'inverseur (84) étant un convertisseur de source de tension (230; 330) selon l'une quelconque des revendications 1 à 26, dans lequel les premières bornes CC (32) du redresseur (82) et de l'inverseur (84) sont interconnectées par l'intermédiaire d'une première liaison de transmission (88), et les secondes bornes CC (34) du redresseur (82) et de l'inverseur (84) sont interconnectées par l'intermédiaire d'une seconde liaison de transmission (90).

29. Ensemble convertisseur CC-CC (180) pour interconnecter des réseaux électriques CC (144, 244), l'ensemble convertisseur CC-CC (180) comprenant un inverseur (184) et un redresseur (182), chacun de l'inverseur (184) et du redresseur (182) incluant des première et seconde bornes CC (32, 34) et au moins une borne CA (42), les bornes CC (32, 34) de l'inverseur (184) pouvant être connectées à un premier réseau électrique CC (144), les bornes CC (32, 34) du redresseur (182) pouvant être connectées à un second réseau électrique CC (244), l'un ou l'autre ou chacun de l'inverseur (184) et du redresseur (182) étant un convertisseur de source de tension (230; 330) selon l'une quelconque des revendications 1 à 26, dans lequel les bornes CA (42) de l'inverseur (184) et du redresseur (182) sont interconnectées par l'intermédiaire d'une liaison de transmission (92) ou d'une pluralité de liaisons de transmission.
